# FASCICULE DE BREVET EUROPEEN

(11) **EP 2 438 426 B1**
(45) Date de publication et mention de la délivrance du brevet: **21.09.2016**
(21) Numéro de dépôt: 10727020.9
(22) Date de dépôt: 04.06.2010
(51) Int. Cl.: G01N 21/55, G01N 21/64, G01N 21/552

(54) **UTILISATION D'UNE COUCHE DE SILICIUM AMORPHE ET PROCÉDÉS D'ANALYSE**
VERWENDUNG EINER AMORPHEN SILICIUMSCHICHT UND ANALYSEVERFAHREN
USE OF AN AMORPHOUS SILICON LAYER AND ANALYSIS METHODS

(30) Priorité: 05.06.2009 FR 0902747
(43) Date de publication de la demande: 11.04.2012
(73) Titulaire: Ecole Polytechnique, 91128 Palaiseau Cedex (FR); Centre National de la Recherche Scientifique (CNRS), 75794 Paris Cedex 16 (FR); Université des Sciences et Technologies de Lille 1, 59655 Villeneuve-d'Ascq Cedex (FR)
(72) Inventeur: OZANAM, François, F-91310 Leuville-sur-Orge (FR); TOUAHIR, Larbi, F-59170 Croix (FR); GALOPIN, Elisabeth, F-92120 Palaiseau (FR); BOUKHERROUB, Rabah, F-59650 Villeneuve d'Ascq (FR); CHAZALVIEL, Jean-Noël, 06600 Antibes (FR); GOUGET, Anne, Chantal, F-92380 Garches (FR); SZUNERITS, Sabine, F-59650 Villeneuve d'Ascq (FR)
(74) Mandataire: Gevers & Orès
(86) Numéro de dépôt international: PCT/FR2010/000412
(87) Numéro de publication internationale: WO 2010/139869

(56) Documents cités:
- WO-A2-2008/012705
- FR-A1- 2 891 279
- US-A1- 2009 141 376
- US-B1- 6 194 223
- DAHMEN C ET AL: "Surface functionalization of amorphous silicon and silicon suboxides for biological applications" THIN SOLID FILMS, ELSEVIER-SEQUOIA S.A. LAUSANNE, CH, vol. 427, no. 1-2, 3 mars 2003 (2003-03-03), pages 201-207, XP004417490 ISSN: 0040-6090 cité dans la demande
- STEWART M E ET AL: "Nanostructured plasmonic sensors" CHEMICAL REVIEWS FEBRUARY 2008 AMERICAN CHEMICAL SOCIETY US, vol. 108, no. 2, février 2008 (2008-02), pages 494-521, XP002602384 DOI: DOI:10.1021/CR068126N
- Sabine Szunerits ET AL: "Short- and Long-Range Sensing on Gold Nanostructures, Deposited on Glass, Coated with Silicon Oxide Films of Different Thicknesses", Journal of Physical Chemistry C, vol. 112, no. 22, 1 June 2008 (2008-06-01) , pages 8239-8243, XP055239567, ISSN: 1932-7447, DOI: 10.1021/jp800478h

## Description

### Domaine technique

La présente invention se rapporte à l'utilisation d'une couche (CS) continue à base de silicium amorphe hydrogéné dans un procédé d'analyse par fluorescence et/ou par résonance plasmonique de surface (RPS).

La présente invention trouve ses applications industrielles notamment dans des procédés de suivi de synthèse biochimique, de détection de molécules, de détection d'interaction entre molécules et de criblage moléculaire.

Dans la description ci-dessous, les références entre crochets ([]) renvoient à la liste des références présentée après les exemples.

### Etat de la technique

La mesure à haut débit des interactions biomoléculaires, en particulier pour les protéines mais aussi pour des molécules de poids moléculaire plus faible comme les oligonucléotides, est un enjeu important dans certains domaines d'application comme le diagnostic ou le criblage pour la recherche de nouveaux médicaments. De ce point de vue, les biocapteurs offrent des solutions plus efficaces que les essais classiques sur membranes, surtout lorsqu'ils peuvent être utilisés dans des configurations permettant une mesure massivement parallèle de plusieurs couples sonde/cible sur le même support. Ils offrent également une solution beaucoup plus performante que les stratégies de détection en solution d'espèces servant de marqueurs pour des biomolécules, même lorsqu'on utilise des systèmes de détection intégrés performants. Par exemple, Conde et al. (J. Non-Crystal. Solids 2008, 354, 2594-2597) décrivent un procédé de détection par fluorescence utilisant une photodiode de silicium amorphe hydrogéné (a-Si :H) de dimensions 200 µm × 200 µm, formant un ilot déposé sur une couche de verre. La photodiode est recouverte d'une couche de nitrure de silicium (SiNₓ), puis d'une couche de carbure de silicium hydrogéné amorphe (SiC:H) d'une épaisseur de 1,96 µm. La couche de carbure de silicium hydrogéné amorphe est utilisée dans un but de filtrage. Cette méthode n'envisage pas la fixation d'une sonde à la surface d'un support. Elle ne permet donc que de détecter la présence d'un marqueur fluorescent en solution, mais ne permet ni d'envisager des mesures d'interactions biomoléculaires, ni a fortiori des mesures en parallèle et à haut débit.

Pour mesurer ces interactions, il est essentiel de pouvoir mesurer en fonction du temps les cinétiques d'association/dissociation des couples sonde/cible. La mesure de ces interactions en temps réel est aussi nécessaire pour disposer de solutions efficaces pour des applications dans le domaine du contrôle, en particulier lorsqu'il s'agit de contrôle « en flux », par exemple pour contrôler des produits en sortie de chaîne, ou en surveillance, notamment en détection environnementale de marqueurs toxiques.

Parmi les techniques actuellement disponibles, deux types de détection offrent des solutions efficaces au suivi des interactions moléculaires en temps réel : la fluorescence et la résonance de plasmon de surface (RPS pour « Résonance plasmonique de surface » ou « Résonance de plasmon de surface »). On trouve actuellement sur le marché des lecteurs basés sur l'un ou l'autre de ce type de détection et permettant le suivi en temps réel et in situ de l'association et/ou de la dissociation d'un couple de biomolécules, impliquant notamment une sonde attachée à la surface d'un support solide, et une cible présente dans un échantillon à analyser. La fluorescence offre la meilleure sensibilité, mais présente l'inconvénient de devoir marquer les cibles ou les sondes avec des groupements fluorophores. La résonance de plasmon de surface a l'avantage de pouvoir détecter des interactions entre cible et sonde non marquées, mais présente une sensibilité moins bonne, en particulier si les molécules détectées ont un poids moléculaire peu important. De plus, le couplage de la lumière et de la couche active impose un contrôle précis de l'angle d'incidence, et complique la détection d'images nécessaire pour les applications à haut débit. On peut exciter des résonances localisées de plasmon de surface dans des couches métalliques structurées sous forme d'îlots de dimensions nanométriques. Dans ce cas, les contraintes liées au contrôle de l'angle d'incidence disparaissent, et la détection se fait au moyen d'une analyse spectroscopique simple de la réponse optique de la couche. Malheureusement, en pratique, on n'atteint pas dans ces conditions la sensibilité théorique de la méthode, principalement en raison de limitations dans la chimie d'immobilisation des sondes sur la couche métallique nanostructurée.

Une méthode de détermination simultanée des événements de reconnaissance biomoléculaire par RPS et fluorescence est décrite dans le document US6194223, déposé le 13 avril 1998, et dont les titulaires sont ROCHE DIAGNOSTICS GMBH et BOEHRINGER MANNHEIM GMBH ([1]). Dans ce document, le support comprend une couche de métal, éventuellement recouverte d'un oxyde métallique, sur un substrat transparent, les sondes à analyser étant immobilisées au sein d'une couche auto-assemblée, de préférence thiol sur or ou argent, ou silane sur oxyde. Si elle est présente, la couche d'oxyde a préférablement une épaisseur supérieure à 20 nm. Cette technique présente comme inconvénients une géométrie contraignante pour l'excitation de la RPS, l'absence d'une optimisation du couplage entre RPS et fluorescence, un procédé de greffage des sondes par chimie iono-covalente présentant des inconvénients en termes de stabilité de greffage et de réactivité résiduelle du substrat susceptible d'interférer avec l'analyse. Les inconvénients liés au procédé de greffage apparaissent particulièrement pénalisants pour les mesures en temps réel où les protocoles d'analyse prévoient généralement des séquences d'association/dissociation nécessitant de disposer d'un support suffisamment stable pour être réutilisable.

Des méthodes et un appareillage permettant la détermination simultanée des événements de reconnaissance biomoléculaire par RPS et fluorescence sont décrits dans le document WO2005040770, déposé le 22 octobre 2004, et dont les titulaires sont l'Université d'Arizona et Arizona Board of Regents ([2]). Le support décrit est constitué d'une fibre optique recouverte d'une couche de métal ou de semi-conducteur active pour la résonance plasmon sur substrat transparent, et une couche de détection. Cette couche de détection est un polymère synthétisé de manière à posséder une empreinte moléculaire de la cible à détecter, et à inclure des marqueurs fluorescents, tels que des terres rares. Ces méthodes mettent en oeuvre des moyens d'immobilisation des molécules fluorescentes peu versatiles dans la mesure où il faut synthétiser le polymère en présence des cibles et des sondes et ne permettent pas d'établir le meilleur compromis pour bénéficier d'une mesure combinée de la RPS et de la fluorescence dans des conditions optimales.

Un substrat et une méthode permettant la mesure simultanée de la luminescence et des changements de réflectivité induits par RPS sont décrits dans le document US2006066249, déposé le 21 septembre 2005, et dont le titulaire est Wisconsin Alumni Res. Found. ([3]). Ce substrat est constitué d'une couche métallique structurée en îlots de grande taille, de diamètre supérieur à 0,1 mm, déposée sur une couche hydrophobe recouvrant un substrat transparent, ou directement sur le substrat. Le rôle de la sous-couche hydrophobe est d'étendre la portée du mode plasmon et de bénéficier ainsi d'une meilleure sensibilité pour la détection de la RPS. Les changements de réflectivité sont mesurés au travers du substrat transparent. Ils peuvent être détectés en enregistrant une image. Les molécules à analyser sont immobilisées à la surface des îlots d'or. Cette méthode présente comme inconvénients une géométrie contraignante pour l'excitation de la RPS et un procédé de greffage des sondes par chimie iono-covalente présentant des inconvénients en termes de stabilité de greffage. Elle n'envisage pas la détection simultanée de la fluorescence qui, compte-tenu des choix faits pour l'optimisation de la détection de la RPS, ne pourrait pas se faire avec une sensibilité optimale dans la description proposée.

Une méthode et un capteur permettant de détecter la fluorescence amplifiée par effet plasmonique dans une géométrie autorisant l'acquisition d'images de fluorescence avec des appareils usuels comme un microscope à fluorescence ou un scanner sont décrits dans le document US2009045351, déposé le 22 janvier 2008, et dont le titulaire est l'Université du Maryland ([4]). Le capteur est constitué d'une couche métallique recouverte d'une couche d'un diélectrique structuré périodiquement. Le rôle de cette couche diélectrique est de permettre le couplage de l'excitation aux modes plasmon dans une géométrie moins contraignante que celle décrite dans le document US6194223, déposé le déposé le 13 avril 1998, et dont les titulaires sont ROCHE DIAGNOSTICS GMBH et BOEHRINGER MANNHEIM GMBH ([5]). En particulier, l'excitation n'est plus obligatoirement en géométrie de réflexion totale et devient possible par la face avant. Le capteur comporte des variantes dans lesquelles la couche de diélectrique est elle-même recouverte d'une deuxième couche métallique, et/ou la couche de diélectrique est structurée en différentes régions possédant chacune des motifs de périodicité différente, permettant ainsi une exaltation optimale de la fluorescence à une longueur d'onde associée à chaque motif. Les sondes à analyser sont positionnées sur la couche de diélectrique, et possiblement liées grâce à une fonctionnalisation de la surface (non décrite). Cette méthode présente néanmoins plusieurs inconvénients. Elle impose encore des conditions contraignantes en termes de contrôle d'angle d'incidence de l'excitation, de positionnement et d'orientation de l'échantillon, tous ces paramètres devant être adaptés suivant la région du support sondée dans les variantes possédant plusieurs motifs. Par ailleurs, elle n'envisage pas la détection simultanée de la RPS, qui s'avérerait délicate à mettre en place compte tenu des contraintes existant pour l'excitation.

Un capteur utilisant l'amplification de la fluorescence par les modes plasmon localisés d'une fine couche métallique déposée sous forme d'îlots sur un substrat est décrit dans le document US5449918, déposé le 20 août 1993, et dont le titulaire est United Kingdom Government KINGDOM GOVERNMENT ([6]). Les sondes fluorescentes sont situées à environ 6 nm de la surface des îlots métalliques, et déposées par trempage du capteur dans une solution appropriée. L'architecture proposée pour l'immobilisation s'avère toutefois exigeante pour combiner l'optimisation de l'analyse et une exaltation optimale de la fluorescence. En effet, l'architecture moléculaire doit fournir à la fois un moyen d'attacher les sondes fluorescentes et un espaceur de longueur contrôlée pour l'optimisation de la fluorescence. Ceci conduit à préférer des molécules présentant une longue chaîne saturée pour servir d'espaceur et à utiliser une technique de dépôt par trempage qui présente de nombreux inconvénients en termes de stabilité d'immobilisation et donc de fiabilité de l'analyse. De plus, le document n'envisage pas la détection simultanée de la RPS localisée.

Une méthode de détection et un support associé permettant d'amplifier l'émission de lumière de molécules à analyser et d'acquérir une image de fluorescence sont décrits dans le document US2007273884, déposé le 30 mars 2005, et dont les titulaires sont OMRON TATEISI ELECTRONICS CO et WAZAWA TETSUICHI ([7]). L'amplification de la fluorescence est due au couplage de l'émission aux modes localisés de plasmon de surface au sein du support. Celui-ci est constitué d'une couche de particules métalliques déposées sur un substrat transparent. Des sondes moléculaires, qui peuvent être un biopolymère, capables de reconnaître les molécules à analyser - qui portent un groupement fluorescent - sont mises au contact du support et des particules métalliques. La mesure de la reconnaissance sonde-cible se fait au contact de la solution contenant les molécules cibles à détecter. Dans cette méthode, les contraintes liées au contrôle de l'angle d'incidence subsistent, car l'excitation de la fluorescence n'est envisagée qu'en mode évanescent à partir de la face arrière du capteur. De plus, aucun processus d'immobilisation chimique n'est décrit, et l'absence de couche de fonctionnalisation dans l'architecture conduit les inventeurs à préférer une solution non spécifique comme le dépôt d'un biopolymère qui conduit à des limitations connues, par exemple en termes de stabilité de l'accrochage (puisqu'aucun couplage n'est prévu entre le polymère d'une part et le substrat ou la couche métallique d'autre part), ou en termes de temps de réponse dans les analyses en temps réel.

La protection d'une couche plasmonique active est décrite dans de nombreux documents, comme le document US2002085204, déposé le 25 octobre 2001, et dont le titulaire est Texas Instruments Inc. ([8]), qui décrit l'utilisation de revêtements durs d'une épaisseur de l'ordre de 100 à 300 nm suivant l'extension du mode plasmon évanescent, y compris le carbure de silicium SiC, le carbone dur (diamond-like carbon DLC) et différents oxydes ou nitrures, déposés par CVD ou PECVD. L'épaisseur des couches envisagées dans ce cas garantit une protection efficace de la couche mais empêche d'envisager une exaltation de la fluorescence par RPS, en particulier lorsque la RPS est localisée. Le document EP 1422315, déposé le 20 novembre 2003, et dont le titulaire est Silverstar SRL ([9]) décrit l'utilisation d'une couche d'oxyde de silicium déposée sur une sous-couche de titane pour protéger un substrat ou un film métallique (non explicitement actif plasmoniquement). Dans ce document, la fonctionnalisation de la couche n'est pas décrite, mais la nature de la couche oblige à envisager des schémas de greffage des sondes par chimie iono-covalente présentant des inconvénients en termes de stabilité de greffage et de réactivité résiduelle du substrat susceptible d'interférer avec l'analyse. Le document WO02052260, déposé le 21 décembre 2001, et dont le titulaire est Hofman Andreas ([10]) décrit l'utilisation d'un polymère physisorbé ou d'une couche d'oxyde métallique ou d'oxyde de silicium sur laquelle peut être greffé via un agent de couplage un polymère hôte de molécules biologiques sondes pour constituer un biocapteur. Le document WO2007036544, déposé le 27 septembre 2006, et dont le titulaire est Centre National de la Recherche Scientifique ([11]), décrit une structure voisine (avec sous-couche de titane supplémentaire) dans laquelle les molécules sondes sont fixées directement à l'oxyde de silicium protecteur. Dans les deux documents précédents, le procédé de greffage utilisé est là encore basé sur une chimie iono-covalente présentant des inconvénients en termes de stabilité de greffage et de réactivité résiduelle du substrat susceptible d'interférer avec l'analyse. Le document US6726881, déposé le 29 août 2002, et dont le titulaire est Fuji Photo Film Co. LTD ([12]), décrit l'utilisation d'une couche organo-siliciée, notamment de couches auto-assemblées de silanes fonctionnels, comme couche protectrice et couche d'accrochage de biomolécules, déposée sur la couche métallique active d'un capteur à résonance plasmon. Dans ce cas, la couche hybride organo-minérale impose encore une fois (comme pour une couche d'oxyde) d'avoir recours à un procédé de fonctionnalisation par chimie iono-covalente présentant des inconvénients en termes de stabilité de greffage et de réactivité résiduelle du substrat susceptible d'interférer avec l'analyse. En résumé, ces différentes méthodes de protection présentent donc des inconvénients, soit pour permettre l'exaltation de la fluorescence, soit pour réaliser l'immobilisation de molécules ou de sondes biologiques de manière satisfaisante et reproductible.

Un biocapteur basé sur la résonance localisée de plasmon de surface est décrit dans le document A. J. Haes et R. P. Van Duyne (J. Am. Chem. Soc. 2002, 124, 10596-10604 [13]). Le capteur est constitué de nanocristaux d'argent déposés sur une surface de verre. Les sondes à analyser sont immobilisées à la surface des nanocristaux. La reconnaissance moléculaire est mesurée par le décalage de la bande d'absorption d'excitation des plasmons de surface localisés dans le spectre d'absorption mesuré en transmission. Ce biocapteur ne permet toutefois pas d'obtenir une sensibilité aussi bonne que celle obtenue avec une analyse par fluorescence.

Le document M. E. Stewart et al. (Chem. Rev. 2008, 108, 494-521 [14]) présente un état de l'art concernant l'utilisation de la résonance plasmon de surface localisé (RPSL) pour l'analyse chimique et biologique et l'exaltation de la réponse dans des techniques spectroscopiques, comme la fluorescence. L'article de N. Blow (Nature Methods 2009, 6, 389-393 [15]) met en perspective les apports des techniques RPS, localisée ou non, et les développements actuels pour l'étude des interactions entre protéines. Il y est souligné que ce qui limite actuellement la sensibilité des réalisations exploitant la RPSL pour l'étude des interactions entre biomolécules est de ne pas disposer de procédés de chimie de surface suffisamment performants pour l'immobilisation des biomolécules à la surface des nanoparticules.

L'immobilisation covalente de molécules et biomolécules sur un substrat de silicium ou de silicium poreux en faisant réagir des liaisons SiH de surface est décrite dans le document US2004096893, déposé le 18 novembre 2003, et dont le titulaire est Canada National Research Council ([16]). Une application de cette méthode à un cas particulier d'immobilisation d'une séquence peptidique à un film mince de silicium amorphe hydrogéné a été décrite par C. Dahmen et al. (Thin Solid Films 2003, 427, 201-207 [17]). Toutefois, l'application décrite requiert la synthèse d'un précurseur particulier spécifique au peptide envisagé. Les seuls exemples répertoriés à ce jour concernant le greffage de molécules ou de biomolécules sur une couche mince de silicium amorphe hydrogéné se limitent au greffage de la dite séquence peptidique ([17]), au greffage d'acrylate de méthyle ([17]) et au greffage de chaînes alkyles non fonctionnalisées décrit par A. Lehner et al. (J. Appl. Phys. 2003, 94, 2289-2294 [18]). Une approche versatile permettant l'immobilisation d'un ensemble diversifié de molécules ou biomolécules sur une couche mince de silicium amorphe hydrogéné n'est donnée par aucune de ces descriptions. Il n'y a pas de description connue d'immobilisation de molécules ou biomolécules sur un film mince d'alliage de silicium-carbone amorphe hydrogéné.

Ainsi, aucun dispositif ni aucune méthode de l'art antérieur n'offre de solution satisfaisante pour une immobilisation de molécules ou de biomolécules dans un dispositif d'analyse permettant à la fois d'obtenir la sensibilité de la fluorescence et de détecter des interactions entre molécules cible et sonde non marquées, tout en offrant la possiblité de détecter les interactions entre molécules par une analyse simple de la réponse optique.

Il existe donc un réel besoin d'outils palliant ces défauts, inconvénients et obstacles de l'art antérieur, en particulier conférant une plus grande sensibilité de mesure des interactions biomoléculaires, même pour les molécules de poids moléculaire peu important, offrant notamment la possibilité de détecter les interactions par une analyse simple et reproductible, permettant des applications à haut débit et éventuellement une mesure en temps réel, si possible avec un substrat réutilisable.

### Description de l'invention

L'invention permet précisément de pallier les inconvénients de l'art antérieur et de répondre à ces besoins.

En particulier, la présente invention se rapporte à l'utilisation d'une couche (CS) continue à base de silicium amorphe hydrogéné dans un procédé d'analyse par fluorescence et/ou par résonance plasmonique de surface (RPS).

Notamment, la présente invention se rapporte à l'utilisation d'une couche (CS) continue à base de silicium amorphe hydrogéné ou non hydrogéné pour la fixation d'une sonde, dans un procédé d'analyse choisi parmi un procédé de suivi de synthèse biochimique, un procédé de détection de molécules, un procédé de détection d'interaction entre molécules et un procédé de criblage moléculaire, par fluorescence et/ou par résonance plasmonique de surface (RPS).

L'invention se rapporte également à un support adapté à la mise en oeuvre de la présente invention, comprenant dans cet ordre :
- un substrat (S),
- éventuellement une couche métallique (M),
- une couche (CS),
- éventuellement une couche moléculaire (CM) greffée de façon covalente à la couche (CS).

Des sondes peuvent être déposées sur la couche (CS) directement ou au moyen de la couche moléculaire (CM).

L'invention propose une solution permettant avantageusement de combiner les avantages des modes de détection par résonance de plasmon de surface et par fluorescence. L'invention s'appuie notamment sur l'excitation de résonances localisées de plasmon de surface, de façon à permettre une mesure simple et combinée des deux effets physiques.

Les inventeurs ont de manière inattendue démontré que l'invention permet de bénéficier, sur le même support, d'une augmentation de sensibilité pour des signaux de fluorescence émis à plusieurs longueurs d'onde.

L'invention permet en outre une double détection, sensible et spécifique à la fois par fluorescence et par RPS.

La solution proposée permet une approche originale pour dépasser la limitation habituelle associée à la chimie d'immobilisation des sondes. En outre, elle est compatible avec la détection de molécules de poids moléculaire peu important, comme l'ADN, mais aussi avec celle de molécules de poids moléculaire plus important, comme les protéines.

On entend par « couche continue », au sens de la présente invention, un revêtement se présentant sous la forme d'un film non interrompu. Le revêtement peut être constitué d'une couche de matériau ou de plusieurs couches de matériaux distincts. La couche continue peut couvrir l'ensemble de la zone du substrat utilisée pour l'analyse. La couche continue peut posséder, en tout point de la surface de révêtement, une épaisseur supérieure à 0,5 nm. Avantageusement, cette épaisseur peut varier d'un point à l'autre de la zone à analyser, par exemple sur des distances latérales de l'ordre de 10 nm à 1 µm, ce qui permet d'adapter les propriétés de mouillage de la surface. Avantageusement, cette épaisseur peut varier sur des distances latérales de 1 µm à 1 mm, ce qui permet de moduler spatialement les propriétés optiques du capteur.

On entend par « à base de silicium amorphe hydrogéné ou non hydrogéné », au sens de la présente invention, une couche de matériau amorphe comprenant du silicium amorphe hydrogéné, notamment de 50 à 100 % de silicium amorphe en fraction atomique, et de 0 à 10 % d'hydrogène en fraction atomique. De préférence il est hydrogéné.

On entend par « amorphe », au sens de la présente invention, une forme non cristalline ou partiellement cristalline du silicium. Par « partiellement cristalline », on entend par exemple une couche de silicium constituée d'un assemblage de grains cristallins de taille inférieure à 20 nm, ou de tels grains cristallins au sein de la matrice non cristalline. Avantageusement, les atomes peuvent y être répartis de manière irrégulière, par exemple sous forme de grains. La structure atomique peut ainsi être désordonnée, non cristallisée.

Avantageusement, le matériau amorphe peut posséder un coefficient d'absorption inférieur à celui du silicium cristallin, ce qui permet une meilleure exaltation de la fluorescence. Avantageusement, la transparence du matériau est accrue dans le domaine spectral utilisé pour l'excitation et/ou la détection lors de l'analyse. Avantageusement, il est possible de choisir dans une gamme étendue d'autres propriétés optiques comme l'indice de réfraction en adaptant la composition et/ou la microstructure du matériau amorphe. Avantageusement, il est possible de réaliser des couches (CS) sous la forme de monocouches ou de multicouches de matériaux à base de silicium amorphe hydrogéné ou non hydrogéné de manière à augmenter la sensibilité et/ou la sélectivité de l'analyse.

La couche (CS) a de préférence une épaisseur qui permet la mise en oeuvre de l'invention.

D'une manière générale, l'épaisseur de la couche continue de matériau amorphe peut être choisie pour bénéficier d'une exaltation simultanée des signaux de fluorescence et/ou de résonance plasmon, ou pour bénéficier d'une double détection de différents fluorophores. Elle peut être déterminée par tout moyen connu de l'homme du métier. De telles techniques sont par exemple la spectroscopie de masse d'ions secondaires (SIMS pour « Secondary Ion Mass Spectroscopy »), la spectroscopie de rétrodiffusion de Rutherford (RBS pour « Rutherford back-scattering spectroscopy »), la spectroscopie de photoélectrons couplée à l'érosion ionique, l'ellipsométrie spectroscopique, l'analyse de spectres de transmission optique ou infrarouge, ou le décapage de la couche sur une zone suivi d'une mesure de profilornétrie au bord de cette zone.

L'épaisseur de la couche continue de matériau amorphe peut être choisie dans l'intervalle des valeurs qui correspondent au premier maximum de réflectivité sur un graphique représentant la réflectivité de la structure d'analyse en fonction de l'épaisseur de la couche continue de matériau amorphe, pour les différentes longueurs d'onde des rayonnements utilisés pour l'excitation et la détection au cours de l'analyse. D'une manière générale, l'épaisseur de la couche (CS) peut être inférieure à 200 nm, avantageusement inférieure à 100 nm, à 50 nm ou à 20nm. Avantageusement, une couche (CS) d'épaisseur inférieure à 20 nm permet une meilleure exaltation de la fluorescence par RPSL.

Pour des applications simultanées en fluorescence et RPS, de préférence RPSL, l'épaisseur de la couche continue à base de silicium amorphe peut être de préférence inférieure à 20 nm. Par exemple, l'épaisseur de la couche continue à base de silicium amorphe peut être comprise entre 1 nm et 20 nm, ou entre 5 nm et 15 nm. L'épaisseur de la couche continue à base de silicium amorphe peut être égale à 5 nm.

Une couche (CS) au sens de l'invention peut être préparée selon des techniques connues de l'homme du métier, par exemple par dépôt plasma (PECVD) comme décrit dans le document Solomon et al., Phys. Rev. B., 1988, 38, 9895-9901 ([19]) ou dans le document Tessler et Solomon, 1995. Phys. Rev. B 52, 10962-10971 ([20]), mais aussi par décomposition thermique de silane, ou par évaporation, pulvérisation cathodique, ablation laser, dépôts suivis éventuellement d'une post-hydrogénation (J.I. Pankove, Hydrogenated Amorphous Silicon, Semiconductors and Semimetals Vol.21, part A: Préparation and Structure, Academic, Orlando, 1984, [21]).

Cette couche peut être constituée de silicium amorphe hydrogéné, ou être constituée d'un alliage de silicium amorphe hydrogéné avec un élément chimique comme le carbone, le germanium, ou l'azote.

Avantageusement, la couche (CS) continue peut être un alliage de silicium amorphe carboné. En d'autres termes, la couche (CS) peut être constituée d'un alliage silicium-carbone hydrogéné. La présence de carbone dans le matériau peut permettre de diminuer son indice optique et d'étendre sa gamme de transparence dans le domaine visible du côté des courtes longueurs d'onde (vers le bleu). L'effet obtenu, à l'origine de la présente invention, est l'exaltation de la fluorescence.

Dans ce cas, la couche (CS) peut avoir une fraction atomique [C]/([C+Si]) comprise entre 0 et 0,4, de préférence entre 0,1 et 0,2.

Par exemple, la couche (CS) peut être constituée d'un alliage a-Si_{0,63}C_{0,37}:H, a-Si_{0.67}C_{0.33}:H, a-Si_{0,80}C_{0,20}:H ou a-Si_{0,85}C_{0,15}:H.

La couche (CS) peut également être dopée par inclusion d'impuretés, par exemple par des atomes de phosphore ou de bore. Ce dopage permet de rendre la couche (CS) conductrice, ce qui peut être un avantage dans l'immobilisation des molécules. Ce dopage peut avantageusement inhiber la fluorescence du matériau et ainsi diminuer le bruit de fond lors des analyses. La quantité de ces impuretés peut être comprise par exemple entre 0,001 à 1% atomique dans la couche (CS). Ces impuretés peuvent être introduites par implantation ionique ou lors d'un procédé PECVD sous forme d'un gaz ajouté au mélange réactionnel. Il peut s'agir par exemple de diborane pour le bore ou de phosphine pour le phosphore.

Tout procédé connu de l'homme du métier permettant de préparer un tel alliage peut être utilisé. On peut notamment utiliser les procédés décrits dans les documents Solomon et al. ([19]), Tessler et Solomon ([20]), Street, R.A., 1991, Cambridge University Press, Cambridge ([22]), mais aussi la décomposition thermique de silane, ou l'évaporation, la pulvérisation cathodique, ou l'ablation laser, dépôts suivis éventuellement d'une post-hydrogénation ([21]).

Pour l'analyse de l'alliage obtenu, on peut utiliser toute méthode de mesure de la quantité des différents éléments dans l'alliage connue de l'homme du métier, comme la SIMS ou la spectroscopie de photoélectrons; les propriétés optiques peuvent être précisées par spectroscopie en transmission ou en réflexion, ellipsométrie spectroscopique, spectroscopie à déflexion photothermique; les propriétés électroniques peuvent être vérifiées par étude du courant limité par la charge d'espace.

La couche (CS) peut comprendre plusieurs couches continues de matériau amorphe dont au moins une comprend du silicium amorphe hydrogéné ou un alliage de silicium amorphe hydrogéné. Il peut s'agir d'un empilement de couches (CS), c'est-à-dire d'une succession de couches identiques ou différentes alternant les unes avec les autres. Cette succession de couches peut par exemple comprendre un empilement de couches constituées de silicium amorphe hydrogéné et de couches constituées d'un alliage de silicium amorphe carboné hydrogéné, ou encore d'un empilement de couches d'alliages silicium-carbone hydrogéné de compositions différentes. Un tel empilement peut être répété une dizaine de fois. Par exemple, la couche (CS) peut comprendre de 2 à 20 couches, de préférence de 8 à 12 couches.

Un tel empilement de couches (CS) peut être réalisé par toute technique connue de l'homme du métier, comme par exemple les techniques citées ci-dessus: dépôt plasma [Solomon et al. ([19]), Tessler et Solomon ([20]), Street, R.A. ([22])], décomposition thermique de silane, évaporation, pulvérisation cathodique, ablation laser, dépôts suivis éventuellement d'une post-hydrogénation ([21]).

La couche (CS), ou le support, présente l'avantage d'être réutilisable. Les supports décrits par l'art antérieur ont pour inconvénients d'être détériorés par les traitements chimiques et thermiques de régénération de leur surface, comme les traitements de lavage faisant appel à un changement de pH du milieu, à des solvants spécifiques, ou à une température plus élevée que la température ambiante. Les inventeurs ont réussi, au terme d'un travail de recherche important, à mettre au point la couche (CS) et le support de l'invention, qui présentent l'avantage d'être suffisamment robustes pour pouvoir supporter les traitements chimiques et thermiques de régénération de sa surface, ce qui permet de les réutiliser sans perte de sensibilité et fournit ainsi une solution efficace pour les applications dans le domaine du contrôle ou de la surveillance des réactions chimiques, ou de stockage de matériel biologique. Avantageusement, la couche (CS) ou le support peuvent être réutilisés une fois que les mesures ont été réalisées.

Le support peut comprendre un substrat (S).

La couche (CS) peut être déposée sur un substrat (S).

Le substrat (S) peut être constitué de tout matériau adapté à supporter la ou les couches supérieures, et n'interagissant de préférence pas avec la couche (CS).

Le substrat (S) peut se présenter sous forme d'un support massif nu ou portant une couche, un film ou un revêtement. Avantageusement, le substrat (S) peut se présenter sous la forme d'une surface plane et continue pour un meilleur support de la ou des couches supérieures.

Le substrat (S) peut être transparent ou non transparent.

Le substrat (S) peut comprendre un oxyde, un verre, un polymère ou un métal, par exemple une lame de verre nue ou portant un film métallique ou un film destiné à favoriser l'adhérence des dépôts ultérieurs), ou être constitué d'une structure composite.

Le substrat (S) peut être recouvert d'un oxyde transparent conducteur.

Le substrat (S) peut avoir une épaisseur compatible avec la mise en oeuvre de l'invention. Cette épaisseur peut notamment être adaptée avec la fonction de support de la ou des couches supérieures.

D'une manière générale, l'épaisseur des couches éventuellement présentes à la surface du substrat (S) peut être déterminée par des techniques connues de l'homme du métier. Il peut s'agir par exemple de SIMS, de profilométrie, d'ellipsométrie spectroscopique, de spectrophotométrie en transmission ou en réflexion.

Avantageusement, les couches superficielles du substrat (S) peuvent avoir une épaisseur comprise entre 0 et 100 nm. Il peut s'agir par exemple d'un film de titane de 5 nm, en vue de l'accrochage d'un film métallique d'or, d'argent ou d'un autre métal, à déposer ultérieurement.

La couche (CS) peut être déposée directement sur le substrat (S). Tout mode de dépôt d'une couche à base de silicium sur un substrat (S) connu de l'homme du métier peut être utilisé. Des modes de dépôt adaptés sont par exemple la méthode par PECVD (dépôt chimique en phase vapeur assisté par plasma) ou ceux décrits dans les documents Solomon et al. ([19]) et Tessler et Solomon ([20]).

Le support peut comprendre une couche (M) métallique.

La couche (M) métallique peut comprendre un métal choisi parmi le cuivre, l'argent, l'or, le rhodium, le lithium, le sodium, le potassium, le rubidium, le césium, le magnésium, le calcium, le strontium, le baryum, le zinc, le cadmium, l'aluminium, le gallium, l'indium, le plomb ou un mélange d'au moins deux de ces métaux. Cette liste inclut les métaux nobles ainsi que les métaux alcalins et alcalino-terreux, et peut être étendue à tout métal présentant de bonnes caractéristiques plasmoniques, c'est-à-dire en RPSL une largeur à mi-hauteur (fwhm) de la résonance de plasmon inférieure à 200 nm.

Toute méthode de préparation de la couche (M) métallique connue de l'homme du métier peut être utilisée. Il peut s'agir par exemple d'évaporation, de pulvérisation cathodique, d'ablation laser, de transfert de particules en solution, de dépôt électroless, photochimique ou électrolytique, comme décrit dans le document FR2585730 ([46]) ou FR2529582 ([47]).

La couche (M) métallique peut comprendre un empilement de couches (M) métalliques.

Dans le cas où la couche (M) métallique est présente, la couche (M) métallique peut être déposée sur le substrat (S), et la couche (CS) peut être déposée sur la couche (M) métallique.

Avantageusement, la stabilité de la couche (CS) n'est pas affectée lorsqu'elle est déposée sur la couche (M) métallique. Avantageusement, la présence de la couche (M) métallique permet une exaltation de la fluorescence plus importante encore qu'en l'absence de la couche (M) métallique.

Le dépôt de la couche (M) métallique sur un substrat (S) peut être réalisé par toute méthode connue de l'homme du métier. Des modes de dépôt adaptés sont par exemple l'évaporation thermique par effet Joule ou par bombardement électronique, la pulvérisation cathodique, l'ablation laser, ou les dépôts à partir de solutions, ou ceux décrits dans les documents US6194223 ([1]), WO2005040770 ([2]), US2007273884 ([7]), Szunerits et al., J. Phys. Chem. C 2008, 112, 8239-8243 ([35]) ou US5449918 ([6]).

Le dépôt de la couche (CS) sur la couche (M) métallique peut être réalisé par toute méthode connue de l'homme du métier. On peut utiliser par exemple la méthode PECVD, la décomposition thermique de silane, l'évaporation, la pulvérisation cathodique, l'ablation laser, ou les méthodes décrites dans les documents US2002085204 ([8]), EP1422315 ([9]), WO2007036544 ([11]) ou US672881 ([12]), en remplaçant la couche de revêtement de ces documents par la couche (CS) de l'invention.

La couche (CS) peut être déposée sur une partie seulement du substrat (S) ou de la couche (M), par exemple selon une configuration géométrique adaptée à l'imagerie par RPS. Dans ce cas, le dépôt peut être fait en utilisant un masque adapté à la configuration géométrique souhaitée.

La couche (M) métallique peut avoir une épaisseur compatible avec la mise en oeuvre de l'invention. Cette épaisseur peut notamment être adaptée avec la fonction de support de la ou des couches supérieures.

D'une manière générale, l'épaisseur de la couche (M) métallique peut être déterminée par les techniques connues de l'homme du métier. Il peut s'agir par exemple de SIMS ou de spectrocopie de photoélectrons couplée à une érosion ionique, ou encore de méthodes optiques (ellipsométrie spectroscopique, spectrophotométrie en transmission ou en réflexion).

La couche (M) métallique peut avoir une épaisseur comprise entre 5 nm et 100 nm. Par exemple, la couche (M) métallique peut avoir une épaisseur comprise entre 5 nm et 50 nm, ou une épaisseur d'environ 35 nm.

La couche (M) métallique peut être continue ou discontinue.

On entend par « couche métallique continue », au sens de la présente invention, une couche comprenant au moins un métal réparti de manière homogène sur l'intégralité de la surface du substrat, sans inclusion d'autre matériau ou interruption de la surface métallique. On entend par « couche métallique discontinue », au sens de la présente invention, une surface comprenant au moins un métal, réparti sur une partie de la surface, et non sur l'intégralité de la surface. En d'autres termes, la surface peut comprendre des interstices dans lesquels le métal n'est pas présent. La surface n'est dans ce cas pas homogène à l'échelle microscopique.

Dans le cas où la couche (M) métallique est discontinue, elle peut comprendre des agrégats.

Ces agrégats peuvent être des cristaux métalliques agencés de manière non percolante, c'est-à-dire avec une absence de connectivité, par exemple électrique, entre deux points éloignés de la couche. L'agencement peut être uniforme, c'est-à-dire qu'une quantité identique de métal est présente sur des zones d'aire identique, lorsque la taille de ces zones est choisie plus grande que la taille des îlots élémentaires constituant la couche.

Ces agrégats peuvent présenter au moins deux dimensions submicroniques, c'est-à-dire au moins deux dimensions inférieures à un micromètre (1 µm), par exemple comprises entre 5 nm et 100 nm. Par exemple, ces agrégats peuvent présenter deux dimensions submicroniques. Avantageusement, ces agrégats peuvent présenter une épaisseur submicronique et une largeur submicronique. Alternativement, ces agrégats peuvent présenter trois dimensions submicroniques.

Avantageusement, la couche (CS) permet de protéger la couche (M) métallique.

Une couche peut être présente entre la couche (M) métallique et le substrat (S). Cette couche peut être par exemple une couche de titane, de chrome, de germanium, de cuivre, de palladium ou encore de nickel. L'épaisseur de cette couche peut varier entre 1 nm et 30 nm.

Dans le cas où le substrat (S) comprend, ou est constitué d'un métal, la couche (M) métallique et le substrat (S) peuvent être composés de métaux différents.

Avantageusement, la couche (CS) permet la fixation à sa surface d'une sonde pour l'analyse. Avantageusement, la couche CS permet l'immobilisation de sondes par l'intermédiaire d'une couche moléculaire greffée à sa surface par des liaisons covalentes, avec une qualité de greffage compatible avec une analyse à la fois par fluorescence et par RPS.

Cette sonde peut être toute molécule ou biomolécule dont on veut étudier la liaison avec une autre molécule ou biomolécule présente dans le milieu.

Avantageusement, la sonde liée à la couche (CS) peut être un ligand, une petite molécule organique, une biomolécule, comme un polypeptide ou un anticorps, un carbohydrate, un oligosaccharide ou une molécule d'ADN ou d'ARN, un microorganisme tel une bactérie, ou une partie d'un microorganisme.

Par « polypeptide » on désigne, au sens de la présente invention, tout composé comprenant un peptide constitué d'une séquence d'acides aminés naturels ou non, de forme L ou D, éventuellement choisi parmi les protéines, les peptides, les acides nucléiques peptidiques, les lipopeptides ou les glycopeptides.

On entend par « acide nucléique », au sens de la présente invention, un enchaînement de nucléotides, modifiés ou non, permettant de définir un fragment ou une région d'un acide nucléique, comportant ou non des nucléotides non naturels, et pouvant correspondre aussi bien à un ADN double brin, un ADN simple brin qu'à des produits de transcription des ADN comme les ARN.

Lorsque la molécule à étudier est de type polypeptide, il est possible de rechercher la présence dans un échantillon d'un composé d'intérêt capable de reconnaître ou de se fixer ou de s'adsorber spécifiquement sur ce polypeptide (liaison par exemple de type anticorps-antigène, ligand-récepteur, enzyme-substrat, cette liste n'étant pas limitative). L'homme du métier saura utiliser les conditions et les protocoles standard bien connus pour ce type d'interactions spécifiques, comme décrits par exemple dans le document Chow et al. ([23]).

La couche (CS) peut comprendre à sa surface une sonde ou des sondes de natures différentes. Lorsque la couche (CS) comprend des sondes de différentes natures, chaque sonde peut être déposée sur une partie de la couche (CS).

La sonde peut être exposée en tout ou partie au milieu extérieur, c'est-à-dire que tout ou partie de ces sondes peut ne pas être incluse dans la couche (CS).

La sonde peut être liée directement sur la couche (CS). Par exemple, la sonde peut être adsorbée sur la couche (CS), ou liée par nanoimpression, par lithographie, ancrage ou gravure.

Alternativement, la sonde peut être liée à la couche (CS) par l'intermédiaire d'une couche moléculaire (CM).

Dans ce cas, la couche (CS) peut comprendre à sa surface une couche moléculaire (CM).

Cette couche moléculaire (CM) peut être greffée de manière covalente à la couche (CS). Toute méthode de fixation covalente permettant l'immobilisation des sondes sur silicium, connue de l'homme du métier, peut être utilisée. Il peut s'agir par exemple de silanisation. De préférence, il peut s'agir de greffage chimique ou électrochimique, en particulier d'hydrosilylation photochimique ou thermique, comme décrit par exemple dans les documents Henry de Villeneuve et al. (C. Henry de Villeneuve, J. Pinson, M. C. Bernard, P. Allongue, J. Phys. Chem. B 101, 2415 (1997) [51]), Fellah et al. (S. Fellah, A. Teyssot, F. Ozanam, J.-N. Chazalviel, J. Vigneron, A. Etcheberry, Langmuir 18, 5851, (2002) [52]), Teyssot et al. (A. Teyssot, A. Fidélis, S. Fellah, F. Ozanam, J.-N. Chazalviel, Electrochim. Acta 47, 2565 (2002) [53]), Gurtner et al. (C. Gurtner, A.W. Wun, M. Sailor, Angew. Chem. Int. Ed. 38, 1966 (1999) [54]), Robins et al. (E.G. Robins, M.P. Stewart, J.M. Buriak, Chem. Commun. 2479 (1999) [55]), en particulier d'hydrosilylation photochimique ou thermique, comme décrit par exemple dans les documents Szunerits et al. ([35]), WO2008132325 ([29]), Buriak et al. (J. M. Buriak, Chem. Rev. 102, 1271 (2002) [48]), Boukherroub (R. Boukherroub, Curr. Opin. Solid State Mater. Sci. 9, 66 (2005) [49]), Boukherroub et al. (R. Boukherroub and S. Szunerits, Electrochemistry at the Nanoscale, Nanostructure Science and technology Series. Eds. P.Schmuki and S. Virtanen, Springer-Verlag New York, LLC, 2008, pp: 183-248 [50]), A. Lehner et al. ([18]).

Lorsque la molécule à étudier est de type oligosaccharide, la fixation covalente peut être réalisée comme décrit dans le document de Smet et al., J. Am. Chem. Soc. 2003, 125, 13916-13917 ([44]).

Lorsque la molécule à étudier est de type anticorps, la fixation covalente peut être réalisée comme décrit dans le document Suo et al., Langmuir 2008, 24, 4161-4167 ([45]).

La mise en oeuvre de la méthode de fixation covalente de la couche (CM) sur la couche (CS) permet avantageusement la mise en place d'un moyen de fixation sur la couche (CS) et/ou de groupements favorisant l'immobilisation de molécules en préservant leur activité. Un tel moyen de fixation peut être par exemple un groupement succinimide, un groupement carboxyle, un groupement amine, un groupement OH, un acide aminé, un groupement époxy, un groupement maléimide, un groupement thiol, un polymère fonctionnalisé. Un exemple de groupement favorisant l'immobilisation de molécules en préservant leur activité est toute molécule de la famille des polyéthylènes glycol (PEG), par exemple celles décrites dans le document Voicu et al. ([37]), Prime et al. (K.L. Prime et al., J. Am. Chem. Soc., 1993, 115,10714-10721 [56]), Böcking et al. (T. Bôcking et al., langmuir, 2005, 21, 10522-10529 [57]).

Le moyen de fixation peut permettre avantageusement la formation d'une liaison avec une sonde que l'on souhaite lier à la surface de la couche (CS).

La liaison entre le moyen de fixation et la sonde peut être de nature covalente ou non covalente.

Par exemple, une liaison non covalente peut être une liaison ionique, une liaison hydrogène, une liaison impliquant les forces de Van der Waals ou une liaison hydrophobe.

Un procédé de fabrication d'un support adapté à la mise en oeuvre de l'invention peut comprendre les étapes suivantes :
a) fournir un substrat (S) ;
b) éventuellement déposer un film métallique sur ledit substrat ;
c) déposer sur ledit substrat, ou sur la couche (M) métallique lorsqu'elle est présente, une couche (CS) continue à base de silicium amorphe hydrogéné par dépôt chimique en phase vapeur assisté par plasma (PECVD) ;
d) éventuellement hydrogéner la surface de silicium ;
e) éventuellement lier de manière covalente une couche moléculaire (CM) à la surface de ladite couche (CS) ;
f) éventuellement modifier la couche moléculaire (CM) par une ou plusieurs étapes de traitements physiques ou chimiques en vue de l'immobilisation d'une sonde, comme des ligands, de petites molécules organiques, des biomolécules, des microorganismes ou des parties de microorganismes à la surface de ladite couche moléculaire.

La sonde peut être marquée avec un marqueur fluorescent de manière à réaliser un procédé d'analyse par fluorescence.

On entend par « procédé d'analyse par fluorescence », au sens de la présente invention, un procédé d'analyse exploitant la détection d'un signal fluorescent.

La fluorescence peut être générée par tout type de molécule connue de l'homme du métier, appelée ci-après « marqueur », possédant la propriété d'absorber de l'énergie lumineuse et de la restituer rapidement sous forme de lumière fluorescente.

Ce marqueur peut être un fluorophore ou un fluorochrome. Il peut s'agir par exemple des marqueurs figurant dans le tableau 1.

**Tableau 1**

| Fluorochrome | Absorption (nm) | Emission (nm) |
|---|---|---|
| 1,5 IAEDANS | 336 | 490 |
| 1,8-ANS | 372 | 480 |
| 4-Méthylumbelliferone | 385 | 502 |
| 5-carboxy-2,7-dichlorofluorésceine | 504 | 529 |
| 5-carboxyfluorésceine (5-FAM) | 492 | 518 |
| 5-carboxynapthofluorésceine (pH 10) | 512/598 | 563/668 |
| 5-carboxytetraméthylrodamine (5-TAMRA) | 542 | 568 |
| 5-HAT (hydroxy tryptamine) | 370-415 | 520-540 |
| 5-ROX (carboxy-X-rhodamine) | 578 | 604 |
| | 567 | 591 |
| 6-carboxyrhodamine 6G (6-CR 6G) | 518 | 543 |
| 6-JOE | 520 | 548 |
| 7-Amino-4-méthylcoumarine | 351 | 430 |
| 7-Aminoactinomycine D (7-AAD) | 546 | 647 |
| 7-Hydroxy-4-méthylcoumarine | 360 | 449,455 |
| 9-Amino-6-chloro-2-méthoxyacridine (ACMA) | 412,43 | 471;474 |
| ABQ | 344 | 445 |
| Acide Fuchsin | 540 | 630 |
| Acridine Orange+ADN | 502 | 526 |
| Acridine Orange+ARN | 460 | 650 |
| Acridine Orange, both ADN&ARN | 440-480 | 520-650 |
| Acridine Rouge | 455-600 | 560-680 |
| Acridine Jaune | 470 | 550 |
| Acriflavine | 436 | 520 |
| Acriflavine Feulgen SITSA | 355-425 | 460 |
| Aéquorine (Photoprotein) | | 466 |
| AFPs- Autofluorescent Protein-(Quantum Biotechnologies) | | |
| Alexa Fluor 350TM | 346 | 442 |
| Alexa Fluor 430TM | 342 | 441 |
| Alexa Fluor 488TM | 431 | 540 |
| Alexa Fluor 532TM | 495,492 | 519,52 |
| Alexa Fluor 546TM | 531,532 | 553,554 |
| Alexa Fluor 568TM | 556,557 | 572,573 |
| Alexa Fluor 594TM | 577,578 | 603 |
| Alexa Fluor 633TM | 590,594 | 617,618 |
| Alexa Fluor 647TM | 632 | 650 |
| Alexa Fluor 660TM | 647 | 666 |
| Alexa Fluor 680TM | 668 | 698 |
| Alizarin Complexon | 530-560, 580 | 580 624-645 |
| Alizarine Rouge | 530-560 | 580 |
| Allophycocyanine (APC) | 630,645 | 655,66 |
| AMC, AMCA-S | 345 | 445 |
| AMCA (Aminométhylcoumarine) | 345 | 425 |
| | 347 | 444 |
| AMCA-X | 353 | 442 |
| Aminoactinomycine D | 555 | 655 |
| Aminocoumarine | 346 | 442 |
| | 350 | 445 |
| Anilin bleu | | 600 |
| Anthrocyl stéarate | 360-381 | 446 |
| APC-Cy7 | 625-650 | 755 |
| APTRA-BTC | 466/380 | 520/530 |
| APTS | 424 | 505 |
| Astrazon Brilliant Red 4G | 500 | 585 |
| Astrazon Orange R | 470 | 540 |
| Astrazon Red 6B | 520 | 595 |
| Astrazon Yellow 7 GLL | 450 | 480 |
| Atabrine | 436 | 490 |
| ATTO-TAGTM CBQCA | 465 | 560 |
| ATTO-TAGTM FQ | 486 | 591 |
| Auramine | 460 | 550 |
| Aurophosphine G | 450 | 580 |
| Aurphosphine | 450-490 | 515 |
| BAO 9 (Bisaminophenyloxadiazole) | 365 | 395 |
| BCECF (high pH) | 492,503 | 520,528 |
| BCEFC (low pH) | 482 | 520 |
| Berberine Sulphate | 430 | 550 |
| Beta Lactamase | 409 | 447,52 |
| BFP blue shifted GFP (Y66H) | 381, 382 | 445, 447 |
| Blue Fluorescent protein | 383 | 448 |
| BFP/GFP FRET | | |
| Bimane | 398 | 490 |
| Bisbenzamide | 360 | 461 |
| Bisbenzimide (Hoechst) | 360 | 461 |
| bis-BTC=Ratio Dye, Zn2+ | 455/405 | 529/505 |
| Blancophor FFG | 390 | 470 |
| Blancophor SV | 370 | 435 |
| BOBOTM-1 | 462 | 481 |
| BOBOTM-3 | 570 | 602 |
| Bodipy 492/515 | 490 | 515 |
| Bodipy 493/503 | 533 | 549 |
| Bodipy 500/510 | 509 | 515 |
| Bodipy 505/515 | 502 | 510 |
| Bodipy 530/550 | 528 | 547 |
| Bodipy 542/563 | 543 | 563 |
| Bodipy 558/568 | 558 | 569 |
| Bodipy 564/570 | 564 | 570 |
| Bodipy 576/589 | 579 | 590 |
| Bodipy 581/591 | 584 | 592 |
| Bodipy 630/650-X | 625 | 642 |
| Bodipy 650/665-X | 647 | 665 |
| Bodipy 665/676 | 605 | 676 |
| Bodipy FI | 504, 505 | 511, 513 |
| Bodipy FL ATP | 505 | 514 |
| Bodipy FI-Ceramide | 505 | 511 |
| Bodipy R6G SE | 528 | 547 |
| Bodipy TMR | 542 | 574 |
| Bodipy TMR-X conjugate | 544 | 573 |
| Bodipy TMR-X, SE | 544 | 570 |
| Bodipy TR | 589 | 617 |
| Bodipy TR ATP | 591 | 620 |
| Bodipy TR-X SE | 588 | 616 |
| BO-PROTM-1 | 462 | 481 |
| BO-PROTM-3 | 544 | 570 |
| Brilliant Sulphoflavin FF | 430 | 520 |
| BTC-Ratio Dye Ca2+ | 464/401 | 533/529 |
| BTC-5N -Ratio Dye Zn2+ | 459/417 | 517/532 |
| Calcein | 494 | 517 |
| Calcein Blue | 373 | 440 |
| Calcium CrimsonTM | 588, 589 | 611, 615 |
| Calcium Green | 501,506 | 531 |
| Calcium Green-1 Ca2+ Dye | 506 | 531 |
| Calcium Green-2 Ca2+ | 506/503 | 536 |
| Calcium Green-5N Ca2+ | 506 | 532 |
| Calcium Green-C18 Ca2+ | 509 | 530 |
| Calcium orange | 549 | 575 576 |
| Calcofluor White | 385, 395, 405 | 437, 440, 445 |
| Cascade blueTM | 377 398 399 | 420 423 |
| Cascade yellow | 399 400 | 550 552 |
| Catecholamine | 410 | 470 |
| CCF2 (GeneBlazer) | | |
| CFDA | 494 | 520 |
| CFP- Cyan Fluorescent Protein | 430, 433, 436, (453) | 474,475, 476 (501) |
| CFP/YFP FRET | | |
| Chlorophyll | 480 | 650 |
| Chromomycin A | 436-460 | 470 |
| Chromomycin A | 445 | 575 |
| CL-NERF (ratio dye, pH) | 504/514 | 540 |
| CMFDA | 494 | 520 |
| Coelenterazine Ca2+ Dye, bioluminescence | (429) | 465 |
| Coelenterazine cp (Ca2+ Dye) | (430) | 442 |
| Coelenterazine f | (437) | 473 |
| Coelenterazine fcp | | 452 |
| Coelenterazine h | (437) | 464 |
| Coelenterazine hcp | (433) | 444 |
| Coelenterazine ip | | 441 |
| Coelenterazine n | (431) | 467 |
| Coelenterazine O | 460 | 575 |
| Coumarin Phalloidin | 387 | 470 |
| C-phycocyanine | | |
| CPM Methylcoumarin | 384 | 469 |
| CTC | 400-450 | 602 |
| CTC Formazan | | |
| Cy2TM | 489 | 506 |
| Cy3.18 | 554 | 568 |
| Cy3.5TM | 581 | 598 |
| Cy3TM | 514 | 566 |
| | 552 | 570 |
| | 554 | |
| Cy5.18 | 649 | 666 |
| Cy5.5TM | 675 | 695 |
| Cy5TM | 649 | 666 670 |
| Cy7TM | 710, 743 | 767, 805 |
| Cyan GFP | 433 (453) | 475 (501) |
| cyclic AMP Fluorosensor (FiCRhR) | 500 | 517 |
| CyQuant Cell Proliferation Assay | 480 | 520 |
| Dabcyl | 453 | |
| Dansyl | 340 | 578 |
| Dansyl Amine | 337 | 517 |
| Dansyl Cadaverine | 335 | 518 |
| Dansyl Chloride | 372 | 518 |
| Dansyl DHPE | 336 | 517 |
| Dansyl fluoride | 356 | none |
| DAPI | 359 | 461 |
| Dapoxyl | 403 | 580 |
| Dapoxyl 2 | 374 | 574 |
| Dapoxyl 3 | 373 | 574 |
| DCFDA | 504, 505 | 529 |
| DCFH (Dichlorodihydrofluorescein Diacetate) | 505 | 535 |
| DDAO | 463 | 607 |
| DHR (Dihydrorhodamine 123) | 505 | 534 |
| Di-4-ANEPPS | 496 | 705 |
| Di-8-ANEPPS (non-ratio) | 488 | 605 |
| | 498 | 713 |
| DiA (4-Di-16-ASP) | 456 | 591 |
| DiD (Indodicarbocyanine) Lipophilic Tracer | 644 | 665 |
| DiD (DilC18(5)) | 644 | 665 |
| DIDS | 341 | 415 |
| Dil (DilC18(3)) | 549, 551 | 565 |
| Dinitrophénol | 349 | |
| DiO (DiOC18(3)) | 484, 487 | 501, 502 |
| DiR (Indotricarbocyanine) | 748 | 780 |
| Dir (DilC18(7)) | 750 | 779 |
| DM-NERF (high pH) | 497/510 | 540 |
| DNP | 349 | |
| Dopamine | 340 | 490-520 |
| DsRed | 558 | 583 |
| DTAF | 494 | 520 |
| DY-630-NHS | 621 | 660 |
| DY-635-NHS | 634 | 664 |
| EBFP | 383 | 447 |
| ECFP | 436 | 474 |
| EGFP | 488, 498 | 507, 516 |
| ELF 97 | 345 | 530 |
| Eosin | 524 | 545 |
| Erythrosin | 529, 532 | 554, 555 |
| Erythrosine ITC | 529 | 555 |
| Ethidium Bromide | 510,523 | 595,605 |
| Ethidium homodimer-1 (EthD-1 | 528 | 617 |
| Euchrysin | 430 | 540 |
| EukoLiqht | | |
| Europium (III) chloride | | |
| EYFP | 513, 520 | 527, 532 |
| Fast Blue | 360 | 440 |
| FDA | 494 | 520 |
| Feulgen (Pararosaniline) | 570 | 625 |
| FIF (Formaldehyd Induced Fluorescence) | 405 | 433 |
| FITC (Fluorescein) | 490, 494 | 520, 525 |
| FITC Antibody | 493 | 517 |
| Flazo Orange | 375-530 | 612 |
| Fluo-3 | 480-506, 506 | 520, 527 |
| Fluo-4 | 494 | 516 |
| Fluorescein Diacetate | 495 | 520524 |
| Fluoro-Emerald | 361 | 536 |
| Fluoro-Gold (Hydroxystilbamidine) | 555 | 582 |
| Fluor-Ruby FluorX | 494 | 520 |
| FM 1-43TM | 479 | 598 |
| FM 4-46 | 515 | 640 |
| Fura RedTM (high pH) | 572 | 657 |
| Fura RedTM/Fluo-3 | | |
| Fura-2, high calcium | 335 | 505 |
| Fura-2, low calcium | 363 | 512 |
| Fura-2/BCECF | | |
| Genacryl brilliant Red B | 520 | 590 |
| Genacryl Brilliant Yellow 10GF | 430 | 485 |
| Genacryl Pink 3G | 470 | 583 |
| Genacryl Yellow 5GF | 430 | 475 |
| GeneBlazer (CCF2) | | |
| GFP (S65T) | 498 | 516 |
| GFP red shifted (rsGFP) | 498 | 516 |
| GFP wild type, non-UV excitation (wtGFP) | 475 | 509 |
| GFPuv | 385 | 508 |
| Gloxalic Acid | 405 | 460 |
| Granular Blue | 355 | 425 |
| Haematoporphyrin | 530-560 | 580 |
| Hoechst 33258 | 345 | 487 |
| Hoechst 33342 | 347 | 483 |
| Hoechst 34580 | 392 | 440 |
| HPTS | 355 | 465 |
| Hydroxycoumarin | 325-360 | 386-455 |
| Hydroxytryptamine | 400 | 530 |
| Indo-1, high calcium | 330 | 401 |
| Indo-1, low calcium | 346 | 475 |
| Intrawhite Cf | 360 | 430 |
| JC-1 | 514 | 529 |
| JO-JO-1 | 530 | 545 |
| JO-PRO-1 | 532 | 544 |
| LaserPro | 795 | 812 |
| Laurodan | 355 | 460 |
| LDS 751 (DNA) | 543 | 712 |
| LDS 751 (RNA) | 590 | 607 |
| Leucophor PAF | 370 | 430 |
| Leucophor SF | 380 | 465 |
| Leucophor WS | 395 | 465 |
| Lissamine Rhodamine | 572, 577 | 591, 592 |
| Lissamine Rhodamine B | 577 | 592 |
| LIVE/DEAD Kit Animal Cells | 494 | 517 |
| Calcein/Ethidium homodimer | 528 | 617 |
| LOLO-1 | 566 | 580 |
| LO-PRO-1 | 568 | 581 |
| Lucifer Yellow | 425, 428 | 528, 536, 540 |
| Lyso Tracker Blue | 373 | 422 |
| Lyso Tracker Blue-White | 466 | 536 |
| Lyso Tracker Green | 504, 534 | 511, 551 |
| Lyso Tracker Red | 490 | 516 |
| Lyso Tracker Yellow | 551 | 576 |
| LysoSensor Blue | 374 | 424 |
| LysoSensor Green | 442 | 505 |
| LysoSensor Yellow/Blue | 384 | 540 |
| Mag green | 507 | 531 |
| magdala Red (Phloxin B) | 524 | 600 |
| Mag-Fura Red | 483/427 | 659/631 |
| Mag-Fura-2 | 369/329 | 508 |
| | 369/330 | 511/491 |
| Mag-Fura-5 | 369/330 | 505/500 |
| | 369/332 | 505/482 |
| Mag-Indo-1 | 349/328 | 480/390 |
| | 349/330 | 480/417 |
| Magnesium Green | 506, 507 | 531 |
| Magnesium Orange | 550 | 575 |
| Malachite Green | 628 | |
| Marina Blue | 362 | 459 |
| Maxilon Brilliant Flavin 10 GFF | 450 | 495 |
| Maxilon Brilliant Flavin 8 GFF | 460 | 495 |
| Merocyanin | 555 | 578 |
| Methoxycoumarin | 360 | 410 |
| Mitotracker Green FM | 490 | 516 |
| Mitotracker Orange | 551 | 576 |
| Mitotracker red | 578 | 599 |
| Mitramycin | 450 | 470 |
| Monobromobimane | 398 | 490 |
| Monobromobimane (mBBr-GSH) | 398 | 500 |
| Monochlorobimane | 380 | 461 |
| MPS (Methyl Green Pyronine Stilbene) | 364 | 395 |
| NBD | 466 | 539 |
| NBD Amine | 450 | 530 |
| Nile Red | 515-555, 559 | 590,640 |
| Nitrobenzoxadiodole | 465 | 510-650 |
| Noradrenatine | 340 | 490-520 |
| Nuclear Fast Red | 289-530 | 580 |
| Nuclear Yellow | 365 | 495 |
| Nylosan Brilliant lavin E8G | 460 | 510 |
| Oregon Green | 503 | 522 |
| Oregon Green 488-X | 494 | 517 |
| Oregon GreenTM 488 | 490, 493 | 514, 520 |
| Oregon GreenTM 500 | 497 | 517 |
| Oregon GreenTM 514 | 506 | 526 |
| Pacific Blue | 405 | 455 |
| PBFI | 340/380 | 420 |
| PE-Cy5 | 488 | 670 |
| PE-Cy7 | 488 | 755, 767 |
| PerCP | 488 | 675 |
| PerCP-Cy5.5 | 488 | 710 |
| PE-TexasRed [Red 613] | 488 | 613 |
| Phloxin B (Magdala Red) | 524 | 600 |
| Phorwite AR | 360 | 430 |
| Phorwite BKL | 370 | 430 |
| Phorwite Rev | 380 | 430 |
| Phorwite RPA | 375465 | 565 |
| Phosphine 3R | 365 | 610 |
| PhotoResist | 365 | 610 |
| Phycoerythrin B [PE] | 546-565 | 575 |
| Phycoerythrin R [PE] | 565 | 578 |
| PKH26 (Sigma) | 551 | 567 |
| PKH67 | 496 | 520 |
| PMIA | 341 | 376 |
| Pontochrome Blue Black | 535-553 | 605 |
| POPO-1 | 433 | 457 |
| POPO-3 | 533 | 574 |
| PO-PRO-1 | 435 | 455 |
| PO-PRO-3 | 539 | 567 |
| Primuline | 410 | 550 |
| Procicon Yellow | 470 | 600 |
| | (305), | |
| Propidium lodide (PI) | 536, | 617 |
| | 538 | |
| PyMPO | 412, 415 | 561, 564, 570 |
| Pyrene | 360 | 387 |
| Pyronine | 410 | 540 |
| pyronine B | 540-590 | 560-650 |
| Pyrozal Brilliant Flavin 7GF | 365 | 495 |
| QSY 7 | 560 | |
| Quinacrine Mustard | 440 | 510 |
| Resorufin | 488 | 613 |
| Rh 414 | 571 | 584, 585 |
| Rhod-2 | 532 | 716 |
| Rhodamine | 552 | 576 |
| Rhodamine 110 | 496, 497 | 520 |
| Rhodamine 123 | 507 | 529 |
| Rhodamine 5GLD | 470 | 565 |
| Rhodamine 6G | 525 | 555 |
| Rhodamine B | 540 | 625 |
| Rhodamine B 200 | 523-557 | 595 |
| Rhodamine B extra | 550 | 605 |
| Rhodamine BB | 540 | 580 |
| Rhodamine BG | 540 | 572 |
| Rhodamine Green | 502 | 527 |
| Rhodamine Phallicidine | 558,542 | 575,565 |
| Rhodamine Phalloidine | 542 | 565 |
| Rhodamine Red | 570 | 590 |
| Rhodamine WT | 555 | 530 |
| Rose Bengal | 525, 540 | 550-600 |
| R-phycocyanine | | |
| R-phycoerythrine (PE) | 565 | 578 |
| S65A | 471 | 504 |
| S65C | 479 | 507 |
| S65L | 484 | 510 |
| S65T | 488 | 511 |
| Sapphire GFP | 395 | 511 |
| SBFI | 340/380 | 420 |
| Serotonin | 365 | 520-540 |
| Sevron Brilliant Red 2B | 520 | 595 |
| Sevron Brilliant Red 4G | 500 | 583 |
| Sevron Brilliant Red B | 530 | 590 |
| Sevron Orange | 440 | 530 |
| Sevron Yellow L | 430 | 490 |
| sgBFPTM | 387 | 450 |
| sgBFPTM (super glow BFP) | 387 | 450 |
| sgGFPTM | 474 | 488 |
| sgGFPTM (super glow GFP) | 474 | 509 |
| SITS | 336 | 436 |
| SITS (Primuline) | 395-425 | 450 |
| SITS (Stilbene Isothiosulphonic Acid) | 365 | 460 |
| SNAFL calcein | 506/535 | 535/620 |
| SNAFL-1 | 508/540 | 543/623 |
| SNAFL-2 | 514/543 | 546/630 |
| SNARF calcein | 552/574 | 590/629 |
| SNARF1 | 576/548 | 635/587 |
| Sodium Green | 506,507 | 532 |
| SpectrumAqua | 433,/53 | 480/55 |
| SpectrumGreen | 497/30, 509/31 | 538/44, 524/56 |
| SpectrumOrange | 559/38 560 | 588/48 |
| Spectrum Red | 587, 587/35 | 612, 612/51 |
| SPQ (6-methoxy-N-(3-sulfopropyl)quinolinium) | 344 | 443 |
| Stilbene | 335 | 440 |
| Sulphorhodamine B can C | 520 | 595 |
| Sulphorhodamine G Extra | 470 | 570 |
| SYTO 11 | 508,510 | 527, 530 |
| SYTO 12 | 499, 500 | 522,519 |
| SYTO 13 | 488, 491 | 509, 514 |
| SYTO 14 | 517, 521 | 549, 547 |
| SYTO 15 | 516,518 | 546,555 |
| SYTO 16 | 488, 494 | 518,525 |
| SYTO 17 | 621 | 634 |
| SYTO 18 | 490, 493 | 507, 527 |
| SYTO 20 | 512 | 530 |
| SYTO 21 | 494 | 517 |
| SYTO 22 | 515 | 535 |
| SYTO 23 | 499 | 520 |
| SYTO 24 | 490 | 515 |
| SYTO 25 | 521 | 556 |
| SYTO 40 | 420 | 441 |
| SYTO 41 | 430 | 454 |
| SYTO 42 | 433 | 460 |
| SYTO 43 | 436 | 467 |
| SYTO 44 | 446 | 471 |
| SYTO 45 | 452 | 484 |
| SYTO 59 | 622 | 645 |
| SYTO 60 | 652 | 678 |
| SYTO 61 | 628 | 645 |
| SYTO 62 | 652 | 676 |
| SYTO 63 | 657 | 673 |
| SYTO 64 | 599 | 619 |
| SYTO 80 | 531 | 545 |
| SYTO 81 | 530 | 544 |
| SYTO 82 | 541 | 560 |
| SYTO 83 | 543 | 559 |
| SYTO 84 | 567 | 582 |
| SYTO 85 | 567 | 583 |
| SYTOX Blue | 445 | 470 |
| SYTOX Green | 504 | 523 |
| SYTOX Orange | 547 | 570 |
| Tetracycline | 390-425 | 525-560 |
| Trimethylrhodamine (TRITC) | 555 | 576 |
| Texas RedTM | 595 | 620 |
| Texas Red-XTM conjugate | 595 | 615 |
| Thiadicarbocyanine (DiSC3) | 651, 653 | 674, 675 |
| Thiazine Red R | 596 | 615 |
| Thiazole Orange | 510 | 530 |
| Thioflavin 5 | 430 | 550 |
| Thioflavin S | 430 | 550 |
| Thioflavine TCN | 350 | 460 |
| Thiolyte | 370-385 | 477-488 |
| Thiozole Orange | 453 | 480 |
| Tinopol CBS (Calcofluor White) | 390 | 430 |
| TMR | 550 | 573 |
| TO-PRO-1 | 515 | 531 |
| TO-PRO-3 | 644 | 657 |
| TO-PRO-5 | 747 | 770 |
| TOTO-1 | 514 | 531,533 |
| TOTO-3 | 642 | 660 |
| TriColor (PE-Cy5) | (488) 650 | 667 |
| TRITC TetramethylRodaminelsoThiocyanate | 550 | 573 |
| True Blue | 365 | 425 |
| TruRed | 490 | 695 |
| Ultralite | 656 | 678 |
| Uranine B | 420 | 520 |
| Uvitex SFC | 365 | 435 |
| WW 781 | 605 | 639 |
| X-Rhodamine | 580 | 605 |
| XRITC | 582 | 601 |
| Xylene Orange | 546 | 580 |
| Y66F | 360 | 508 |
| Y66H | 360 | 442 |
| Y66W | 436 | 485 |
| Yellow GFO | 513 | 527 |
| YFP | 513, 520 | 527, 532 |
| YO-PRO-1 | 491 | 506 |
| YO-PRO-3 | 613 | 629 |
| YOYO-1 | 491 | 508, 509 |
| YOYO-3 | 612 | 631 |

Le marquage de la sonde par le marqueur fluorescent peut être réalisé par toute technique connue de l'homme du métier. Il peut s'agir par exemple des techniques de marquage décrites dans les documents Chen et al. Nano Letters, vol. 7, No. 3, 690-696, 2007 ([24]), Bek et al., Nano Letters, vol. 8, No. 2, 485-490, 2008 ([25]), WO2007036544 ([11]) ou Aslan et al., Current Opinion in Chemical Biology, 9 :538-544, 2005 ([26]).

La fluorescence peut être détectée par tout appareil connu de l'homme du métier, et notamment ceux disponibles dans le commerce. Il peut s'agir par exemple de microscopes à fluorescence, de scanners, de spectrophotomètres UV-visible, comme Ultraspec 2000 (marque de commerce, Pharmacia), Specord 210 (marque de commerce, Analytic jena), Uvikon 941 (marque de commerce, Kontron Instruments), TRIAD (marque de commerce, DYNEX), Varian Cary 50, ou de systèmes de détection de fluorescence in situ tel que Hyblive (marque de commerce, Genewave).

On entend par « procédé d'analyse par résonance plasmonique de surface », au sens de la présente invention, un procédé exploitant la détection de la RPS. On entend également la possibilité, pour la couche (CS), d'être désignée comme capteur dans des études de résonance plasmonique de surface.

Ce procédé peut être mis en oeuvre au moyen du support de l'invention, notamment un support comprenant une couche (M) métallique.

Le procédé d'analyse par RPS peut être mis en oeuvre au moyen de tout appareil connu de l'homme du métier. Il peut s'agir par exemple du système Biacore, notamment les appareils Biacore 2000 ou Biacore 3000 (marques de commerce), ou encore les appareils Autolab SPR instrument.

Ce procédé permet la détection de l'interaction d'au moins deux molécules. Le plasmon de surface est une onde à décroissance exponentielle des deux côtés de l'interface séparant la couche (M) métallique du milieu biologique, parallèlement à laquelle elle se propage. Le champ électromagnétique dans le milieu biologique présentant un caractère d'onde évanescente, c'est-à-dire l'amplitude décroissant exponentiellement avec la distance à l'interface, la fixation de molécules sur les sondes va modifier l'information contenue dans l'onde tant au niveau de sa phase que de son amplitude. On détecte une variation de l'indice de l'interface lors de l'accrochage de molécules cibles à la surface où elles s'apparient avec les molécules sondes.

Le procédé d'analyse par RPS peut être un procédé d'analyse par résonance plasmonique de surface localisée (RPSL) ou standard.

Avantageusement, le procédé d'analyse par résonance plasmonique de surface est un procédé de résonance plasmonique de surface localisée.

Dans ce cas, la couche (M) métallique est une couche discontinue.

De manière surprenante, le couplage du procédé RPSL avec une analyse par fluorescence permet avantageusement une exaltation de la fluorescence encore plus importante que lorsque le procédé d'analyse de l'invention combine une analyse par fluorescence et par RPS standard. Les inventeurs émettent l'hypothèse que dans ce cas, le champ électromagnétique de la lumière est fortement augmenté dans les interstices de la couche métallique, ce qui permet une meilleure exaltation de la fluorescence qu'en mettant en oeuvre la RPS standard. Il est également à noter que la RPSL peut être excitée indépendamment de l'angle d'incidence, dans des géométries de réflexion ou de transmission, donc de façon particulièrement simple, adaptée à des analyses à haut débit, et compatible avec une géométrie commode pour la détection de la fluorescence.

Il était jusqu'à présent compliqué de réaliser des analyses quantitatives et qualitatives de l'évolution de ces réactions de reconnaissance moléculaire. La présente invention permet par un moyen simple, peu coûteux et rapide de suivre ces évolutions avec une sensibilité bien meilleure.

Avantageusement, la détection par fluorescence et la détection par résonance plasmonique de surface localisée peuvent être réalisées de manière consécutive ou simultanée.

Avantageusement, l'invention peut être mise en oeuvre dans le cadre d'une détection en temps réel et dans les conditions usuelles d'essai en milieu physiologique.

Avantageusement, l'invention peut également permettre des analyses in situ, c'est-à-dire en temps réel. La sensibilité accrue du système peut permettre de prendre des mesures avec un temps d'acquisition très court tout en conservant une puissance modérée du laser d'excitation, ainsi que de réaliser des analyses quantitatives et qualitatives plus précises que par un procédé d'analyse par fluorescence et RPS standard. Un appareil de mesure permettant les mesures in situ en milieu liquide par réflexion peut être mis en oeuvre au moyen de l'appareil décrit par P. Neuzil et J. Reboud (Anal. Chem. 2008, 80, 6100-6103 [27]).

L'invention peut être mise en oeuvre en milieu liquide. Des systèmes de lecture d'image de fluorescence émise in situ en milieu liquide sont bien connus de l'homme du métier, comme par exemple celui décrit dans le document WO2008132325 ([28]).

De manière surprenante, l'invention peut permettre la détection par des mesures en point final simultanées ou non simultanées.

Avantageusement, les signaux peuvent être acquis en réflexion ou en transmission.

Les signaux peuvent également, de manière avantageuse, être acquis sous forme d'image pour l'analyse parallèle de différentes sondes immobilisées sur le support ou sur la couche (CS).

La présente invention peut être utilisée par exemple dans un procédé de suivi de l'évolution d'une synthèse biochimique, un procédé de détection d'une interaction entre ligands, petites molécules organiques, biomolécules, un procédé de détection d'une interaction entre une biomolécule et un microorganisme ou une partie d'un microorganisme, un procédé de criblage moléculaire ou pour la détection d'une substance dans un échantillon, un procédé pour le suivi de réactions, de liaison ou d'adsorption entre une substance présente dans un échantillon et une sonde liée au support.

L'homme du métier saura utiliser les conditions et protocoles standard connus pour ce type de procédés que l'on souhaite mettre en oeuvre. Par exemple, l'homme du métier saura utiliser les conditions et protocoles décrits dans les documents Chen et al. ([24]), Bek et al. ([25]), WO2007036544 ([11]), Aslan et al. ([26]), ou Ciampi et al., 2007 Langmuir 23,9320-9329 ([30]) en remplaçant les supports par le support décrit dans la présente invention.

Un procédé de détection d'une substance dans un échantillon ou de suivi de réaction, de liaison ou d'adsorption entre une substance présente dans un échantillon et un composé lié au support ou à la couche moléculaire (CM) peut comprendre les étapes suivantes :
i) préparation d'un support ou d'une couche (CS) sur lequel est immobilisé un composé,
ii) mise en contact du support ou de la couche (CS) avec un échantillon susceptible de contenir une substance se liant spécifiquement au composé, dans des conditions appropriées pour la liaison ou l'adsorption de la substance sur le composé,
iii) éventuellement réaliser une étape de lavage afin d'éliminer les substances liées ou adsorbées de manière non spécifique,
iv) déterminer la présence ou la quantité de substance dans l'échantillon par RPS et/ou par fluorescence.

Un autre objet de l'invention se rapporte à une trousse de diagnostic ou d'analyse d'une substance dans un échantillon, comprenant une couche (CS) ou un support tel que défini précédemment et des moyens de détection par résonance plasmonique de surface (RPS) et/ou par fluorescence tels que définis précédemment.

Un autre objet de l'invention se rapporte à un dispositif d'analyse comprenant une couche (CS) ou un support tel que défini précédemment.

D'autres avantages pourront encore apparaître à l'homme du métier à la lecture des exemples ci-dessous, illustrés par les figures annexées, donnés à titre illustratif.

### Brève description des figures

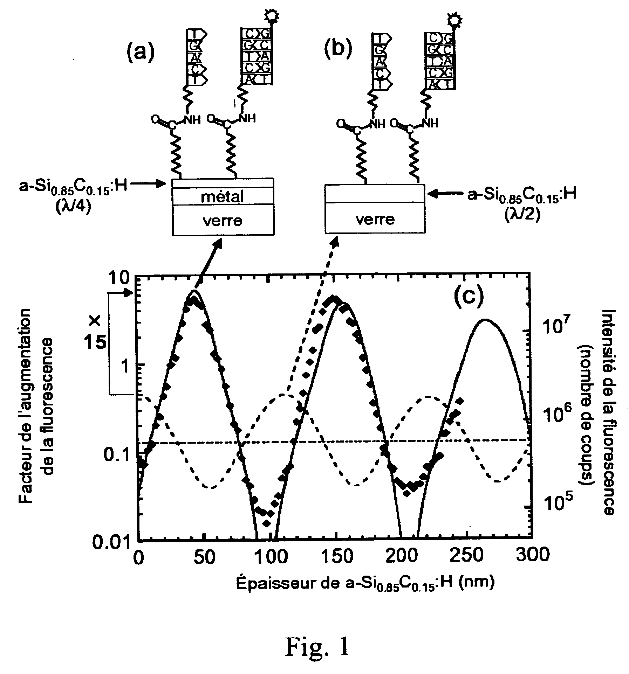

- La figure 1 (a) représente une vue schématique de l'architecture d'une puce à ADN comprenant une couche a-Si₁₋ₓCₓ:H déposée sur un réflecteur en aluminium La figure 1 (b) représente une vue schématique de l'architecture d'une puce à ADN sans réflecteur permettant d'utiliser la chimie d'attachement Si-C avec les propriétés conventionnelles d'un substrat de verre. La figure 1 (c) représente la fluorescence théorique F (ligne pleine, échelle de gauche) comparée à la mesure de l'intensité de fluorescence (symboles, échelle de droite) en fonction de l'épaisseur de la couche a-Si_{0.85}C_{0.15} :H exprimée en nanomètres. Le calcul est réalisé pour le marqueur Cy5 (excitation à 635 nm, émission à 670 nm). Afin d'obtenir un rendu adéquat, les deux échelles ont été ajustées par translation. La courbe en tiretés représente la fluorescence théorique F calculée pour une couche d'a-Si_{0.85}C_{0.15} :H déposée directement sur du verre [schéma (b)]. La droite horizontale en pointillés est la valeur de F calculée pour une couche d'a-Si_{0.85}C_{0.15} :H très épaisse.

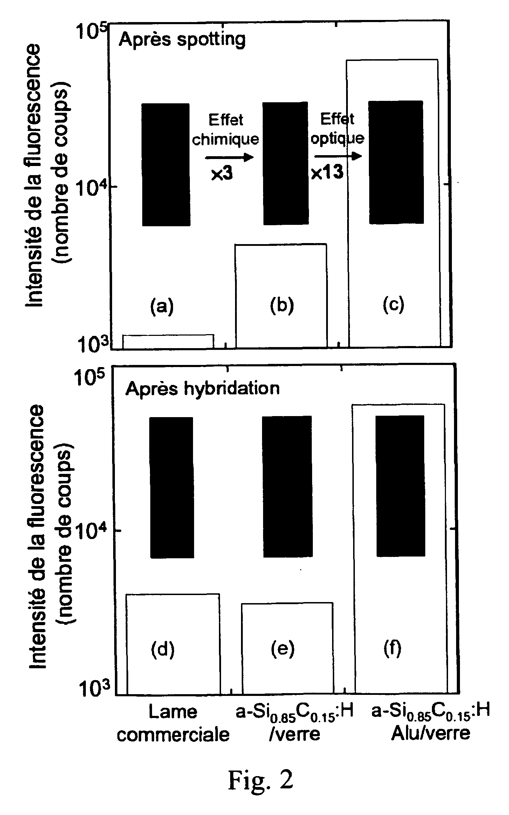

- La figure 2 représente des diagrammes de l'intensité de fluorescence et les formes des spots obtenues sur les lames commerciales (a, d), sur a-Si_{0.85}C_{0.15} (112 nm) /verre (b, e) et sur a-Si_{0.85}C_{0.15} (44 nm) /Al/verre (c, f), après spotting (a, b, c) et après hybridation (d, e, f). Les spots des 25 nucléotides d'ON1 marqués directement avec la Cy5 sont montrés en haut, et les spots après hybridation entre des brins de 50 nucléotides non marqués hybridés avec leurs oligonucléotides complémentaires marqués avec la Cy5 sont montrés en bas. Les valeurs des histogrammes correspondent aux valeurs médianes corrigées par les (faibles) valeurs de fluorescence du bruit de fond, mesurées au voisinage des spots.

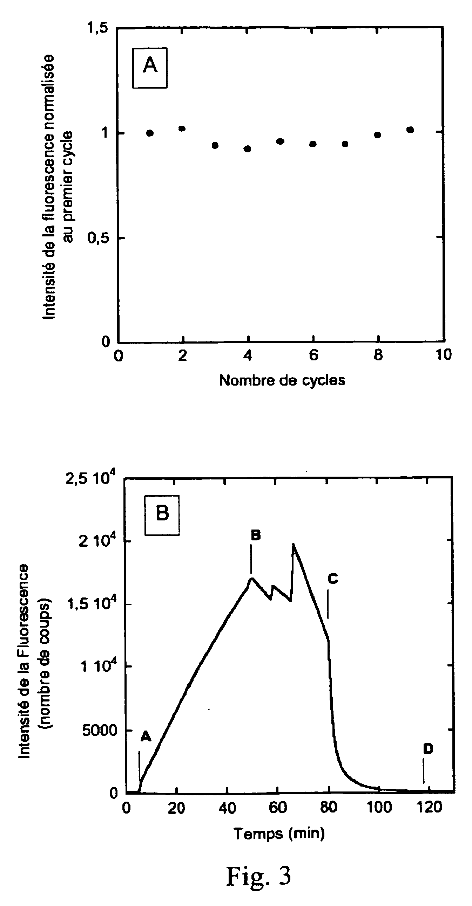

- La figure 3A représente l'intensité de la fluorescence après 30 minutes d'hybridation, en fonction du nombre de cycles d'hybridation/ déshybridation, normalisée au premier cycle. La figure 3B montre un cycle d'hybridation/ déshybridation mesuré in situ avec une machine Hyblive (marque commerciale) : (A) Introduction de la solution contenant les cibles complémentaires marquées avec Cy5, (B) cycles de lavage post-hybridation, (C) introduction de la solution de déshybridation ; (D) rinçage après la déshybridation.

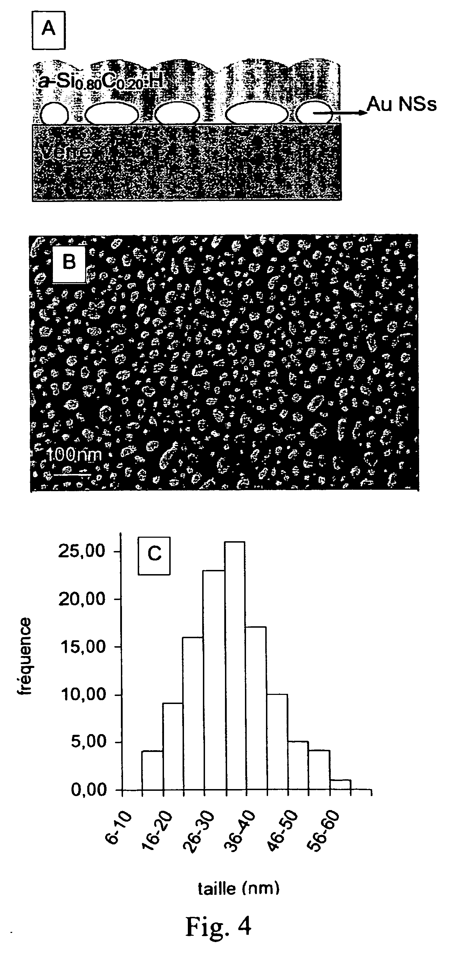

- La figure 4 représente (A) un schéma de l'interface RPSL, composée d'une structure multicouche, où les nanostructures en or ont été revêtues avec un film fin de a-Si₁₋ₓCₓ:H, (B) l'image en microscopie électronique à balayage (MEB) typique de l'interface RPSL formée. Un histogramme de distribution des tailles des nanoparticules est représenté en (C).

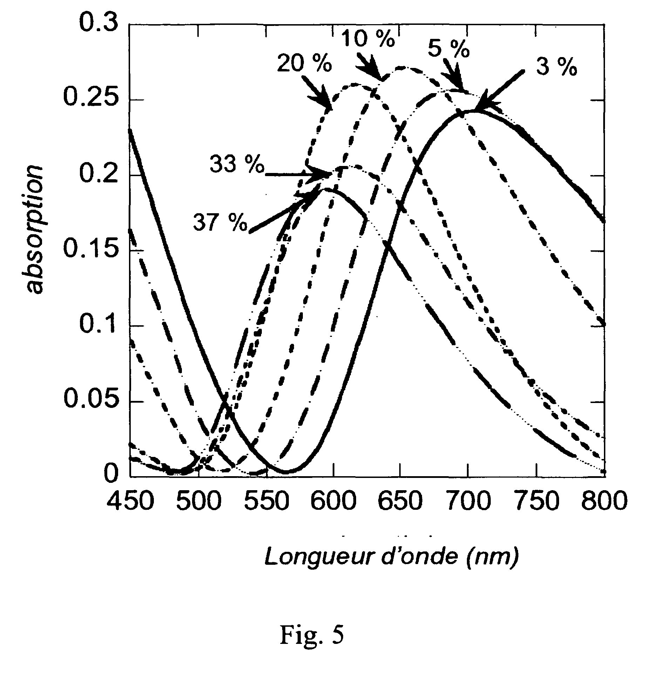

- La figure 5 représente le spectre de transmission UV-Visible (UV-Vis) dans l'air d'une interface verre/Nanoparticules d'or revêtue d'un film de 20 nm d'épaisseur d'a-Si₁₋ₓCₓ:H, x variant de 0,03 à 0,37 comme indiqué sur le figure.

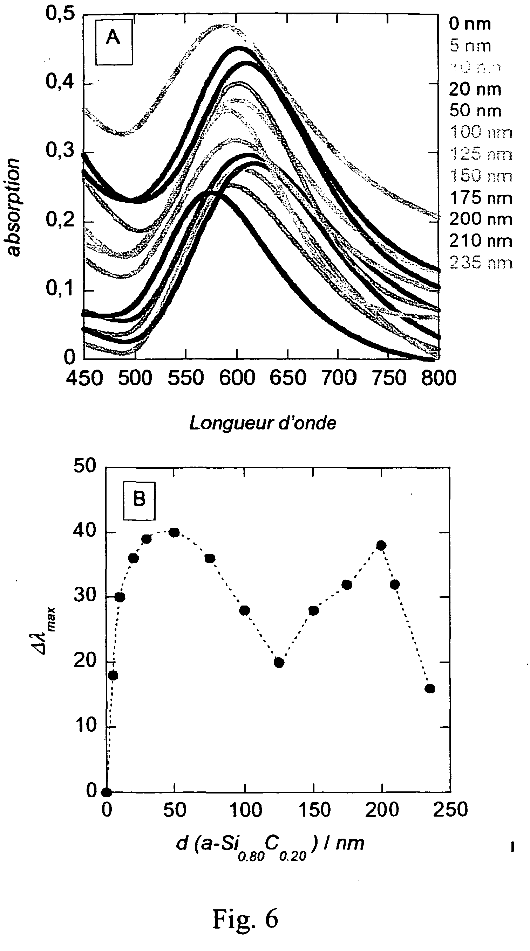

- La figure 6 représente (A) le spectre de transmission UV-Vis dans l'air d'une interface verre/ Nanoparticules d'or recouverte de couches superposées de a-Si_{0,8}C_{0,2}:H d'épaisseur croissante (B) la variation du déplacement du maximum de RPSL en fonction de l'épaisseur en nm de la couche superposée de a-Si_{0,8}C_{0,2}:H.

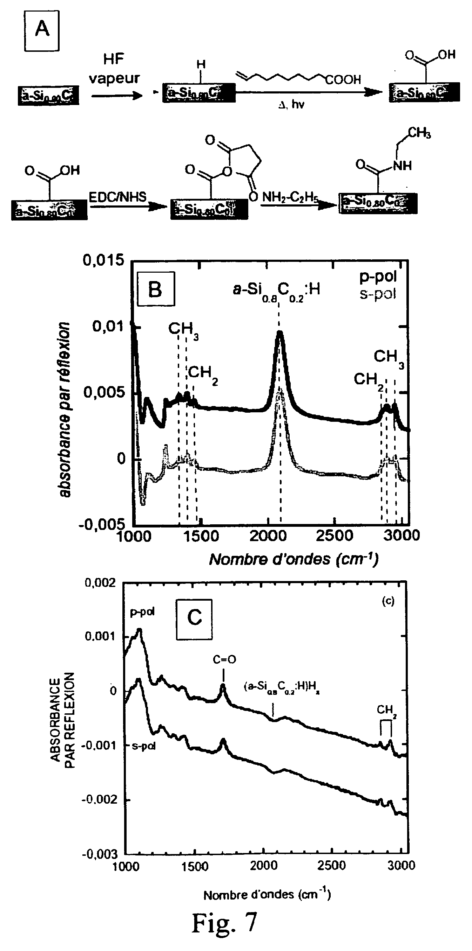

- La figure 7 représente (A) le schéma de réaction d'une surface a-Si_{0,8}C_{0,2}:H hydrogénée avec de l'acide undécylénique et la fonctionnalisation subséquente ; (B) le spectre ATR-FTIR d'un film de a-Si_{0,8}C_{0,2}:H épais de 20 nm, enregistré avec des polarisations p et s ; (C) le spectre ATR-FTIR du même film de a-Si_{0,8}C_{0,2}:H modifié avec l'acide undécylénique ; les lignes en pointillés correspondent aux courbes ajustées pour calculer les concentrations supericielles des groupes carboxyles liés à la surface.

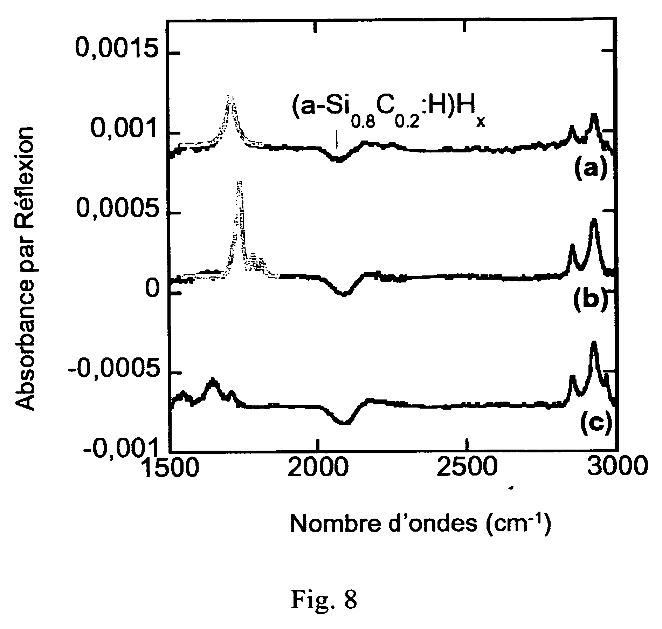

- La figure 8 représente le spectre ATR-FTIR de a-Si_{0,8}C_{0,2}:H modifié avec l'acide undécylénique (a), réaction avec EDC/NHS (b),et amidation avec l'éthanolamine (c) ; Les lignes grises correspondent aux courbes ajustées pour calculer les concentrations supericielles des groupes fonctionnels liés à la surface.

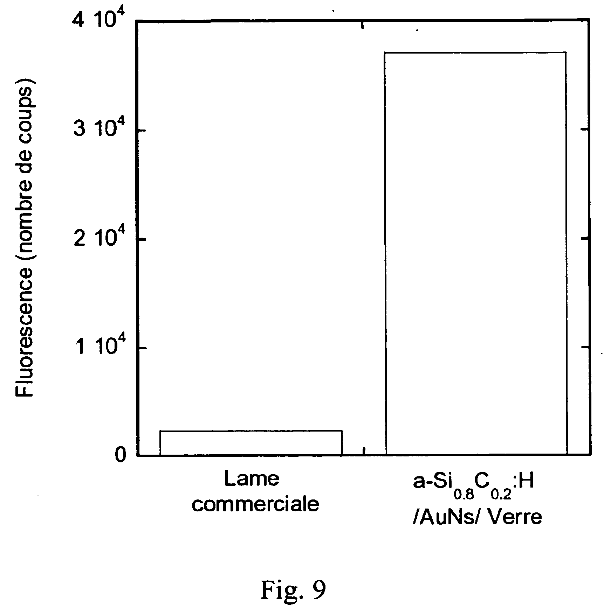

- La figure 9 représente un diagramme d'intensité de fluorescence sur une lame commerciale et une lame a-Si_{0,8}C_{0,2}:H (5nm) sur des nanoparticules d'or. Ces valeurs obtenues après immobilisation des sondes ON4 correspondent aux valeurs médianes corrigées par les (faibles) valeurs de fluorescence du bruit de fond, mesurées au voisinage des spots

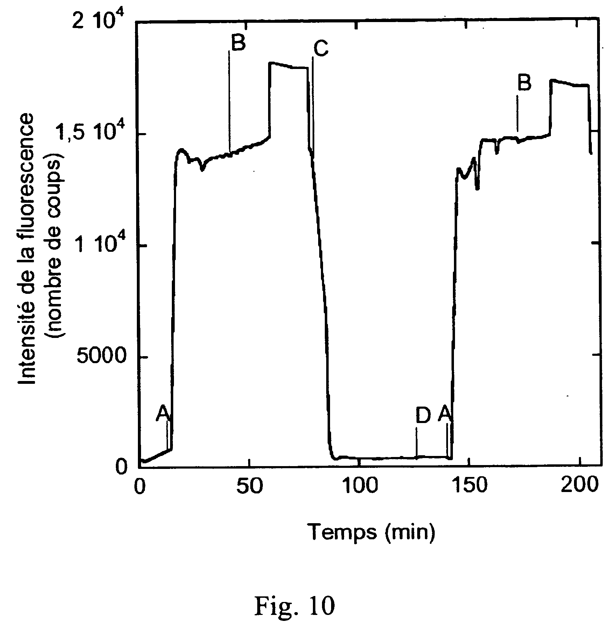

- La figure 10 représente un cycle d'hybridation/ déshybridation/hybridation mesuré in situ par fluorescence : (A) Introduction de la solution contenant les cibles complémentaires marquées avec Cy5, (B) cycles de lavage post-hybridation, (C) introduction de la solution de déshybridation ; (D) rinçage après la déshybridation.

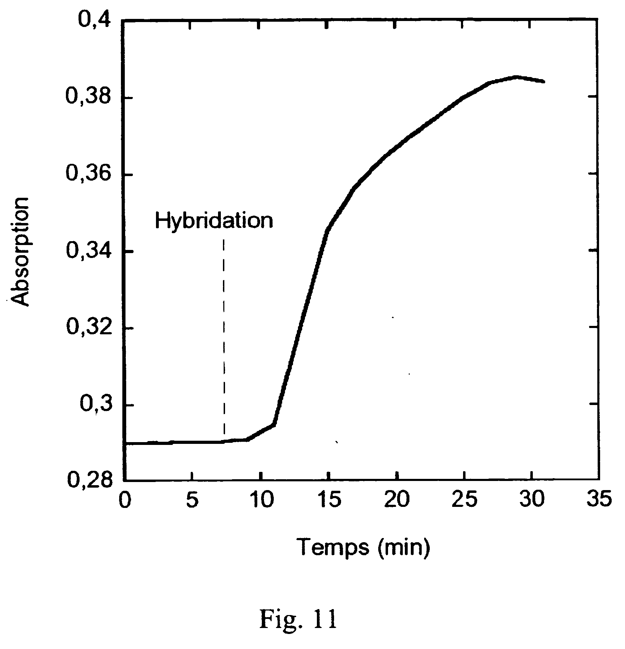

- La figure 11 représente l'évolution de l'absorption (signal RPSL) à 536 nm au cours de l'hybridation mesurée in situ par spectromètrie optique. L'hybridation correspond à la reconnaissance sonde/cible des oligos sondes ON5 et des oligomères cibles ON6.

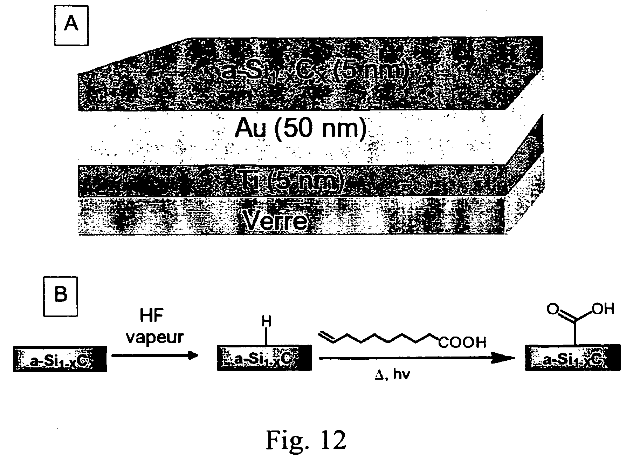

- La figure 12 représente (A) le schéma de l'interface de résonance de surface plasmonique, composée d'une structure multicouche dans laquelle un mince film d'or a été revêtu avec un film fin de a-Si₁₋ₓCₓ:H, (B) l'hydrogénation en surface d'un film fin de a-Si₁₋ₓCₓ:H et la fonctionnalisation subséquente avec l'acide undécylénique.

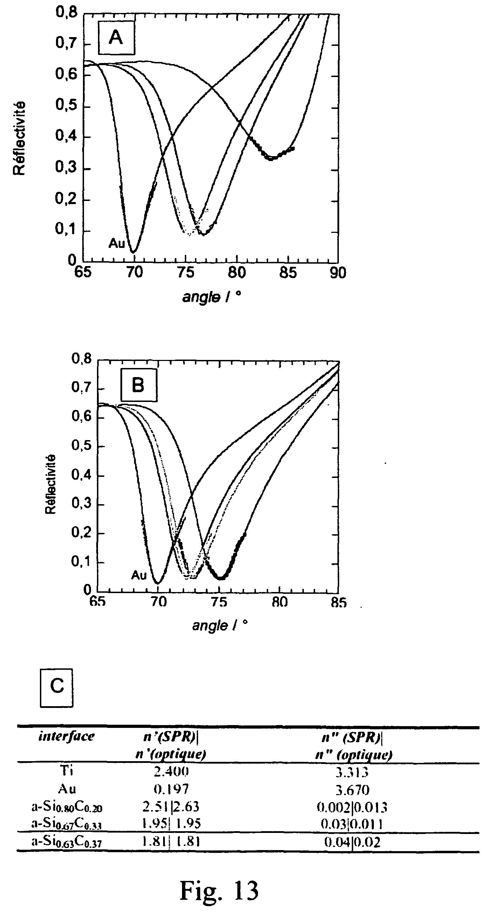

- La figure 13 représente les courbes de réflectivité en fonction de l'angle d'incidence (exprimé en degrés) de réflectivité des substrats de RPS revêtus avec des films de a-S₁₋ₓCₓ:H épais de 10 nm (A) et 5 nm (B): or non revêtu (courbe fine en noir), a- Si_{0,80}C_{0,20} (points gris), a-Si_{0.67}C_{0.33} (points gris clair), a-Si_{0.63}C_{0.37} (courbe épaisse en noir) dans l'eau; Les valeurs expérimentales obtenues (cercles) ont été comparées aux courbes théoriques de RPS (courbes) calculées en utilisant WinSpall 2.0., (C) Liste des indices de réfraction à 630 nm déterminés à partir de mesures RPS et de mesures optiques de réflectivité (Solomon et al., Phys. Rev. B., 1988, 38, 13263-13270 [34]).

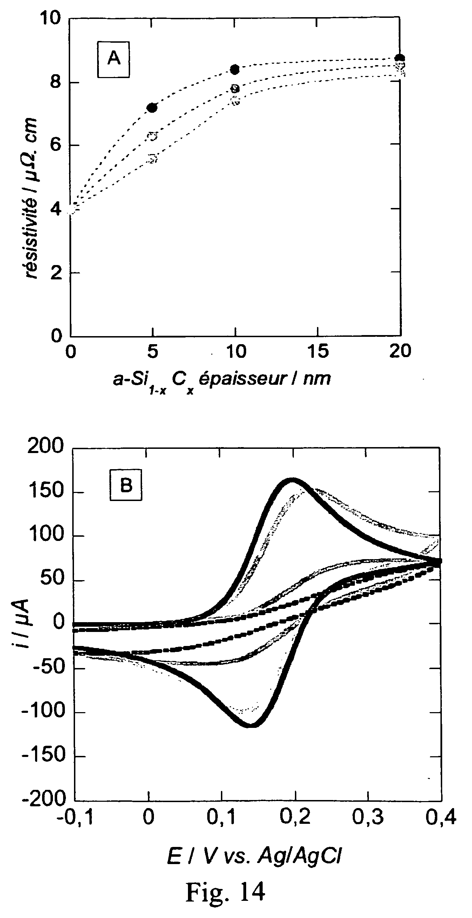

- La figure 14 représente (A) les mesures de résistance (exprimées en µΩ.cm) des supports d'analyse en fonction de l'épaisseur de la couche (CS) (exprimée en nm) et (B) les courbes de voltampérométrie cyclique dans une solution aqueuse de Fe(CN)₆⁴⁻ (10 mM)/PBS (0.1 M) pour un film d'or de 50 nm déposé sur du verre avec une sous-couche d'adhésion de titane de 5 nm non revêtue (ligne noire) et revêtue de 5 nm d'a-Si_{0,63}C_{0,37} (gris clair), a-Si_{0,67}C_{0,33} (gris) et a-Si_{0,80}C_{0,20} (pointillés noirs), vitesse de balayage: 0,05 V s⁻¹, A=0,07 cm².

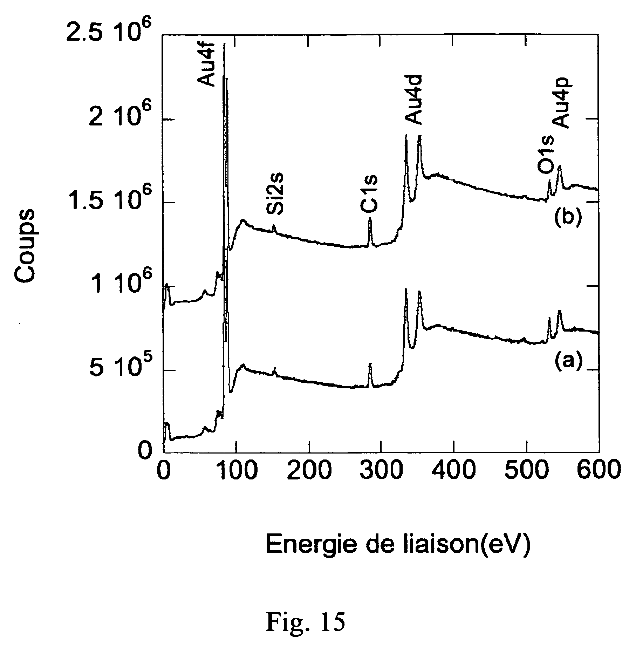

- La figure 15 représente le spectre d'analyse XPS d'a-Si_{0,63}C_{0,37} avant (a) et après réaction avec l'acide undécylénique (b).

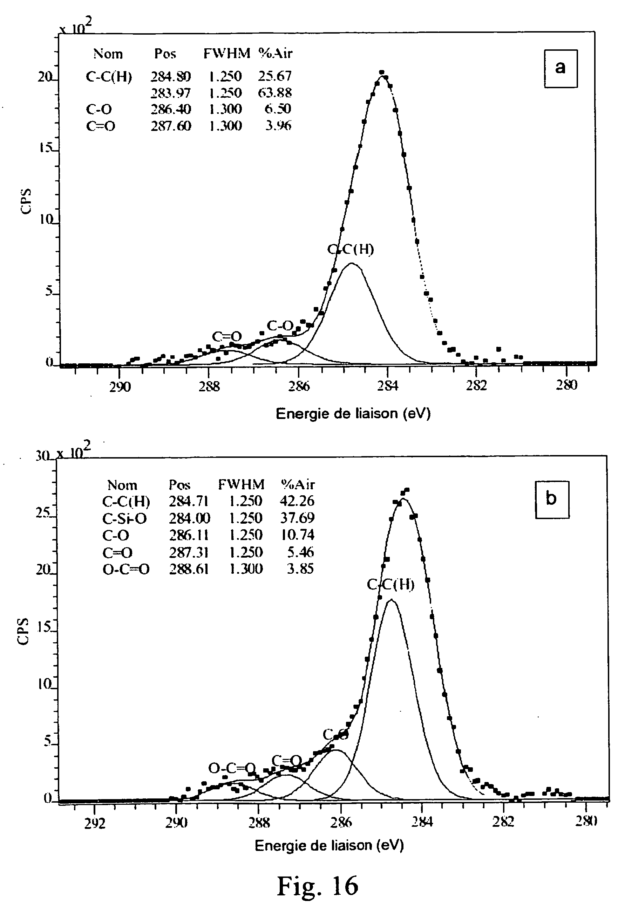

- La figure 16 représente le spectre XPS haute résolution de C1s d'a-Si_{0,63}C_{0,37} tel que déposé avant (a) et après réaction avec l'acide undécylénique (b).

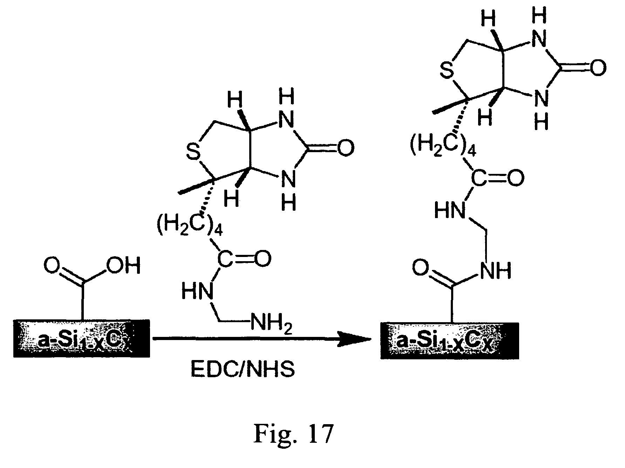

- La figure 17 représente schématiquement le procédé de greffage de la biotine à terminaison NH₂ sur la surface à terminaison acide à l'aide d'un traitement via NHS/EDC.

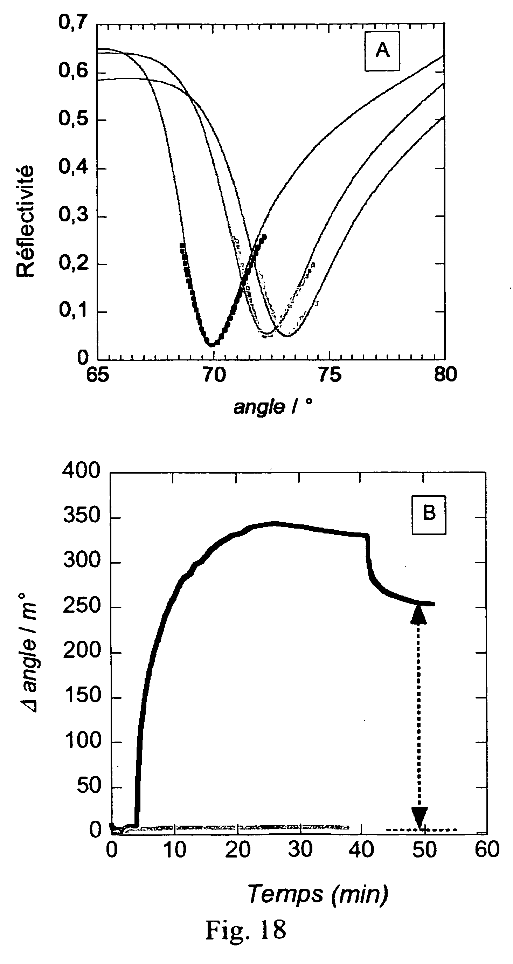

- La figure 18 représente (A) les courbes de réflectivité en fonction de l'angle d'incidence de substrats en or (noir) revêtus avec 5 nm d'a-Si_{0,63}C_{0,37} à terminaison acide (gris) et modifiés avec la biotine (gris clair) dans du PBS. Valeurs obtenues expérimentalement (courbes en pointillés) comparées aux courbes de RPS théoriques (courbes en trait plein) calculées grâce à WinSpall 2.0, (B) courbes RPS associées à la l'interaction de l'avidine (10 µg/mL) avec une surface Au/a-Si_{0,63}C_{0,37} modifiée par la biotine (noir), et avec une surface Au/a- Si_{0,63}C_{0,37} non modifiée (gris).

### EXEMPLES

### EXEMPLE 1 : PRÉPARATION DE BIOCAPTEURS À FLUORESCENCE HAUTEMENT SENSIBLES ET RÉUTILISABLES À BASE D'ALLIAGES DE SILICIUM-CARBONE AMORPHES HYDROGÉNÉS

### 1) Préparation des échantillons

Un film mince de a-Si₁₋ₓCₓ:H est déposé sur des substrats par PECVD en régime de basse puissance (pour x=0,15, débit des gaz: 9 sccm (SiH₄), 24 sccm (CH₄), plasma : 13,56 MHz et 100 mWcm², température du substrat : 250°C, vitesse de dépôt : 1,2 µmh⁻¹ (Solomon et al., [19]). Les substrats utilisés sont des lames de microscope en verre non fonctionnalisées sur lesquelles peut être (ou pas) déposée une couche d'aluminium d'environ 200 nm d'épaisseur par évaporation sous vide.

La surface a-Si₁₋ₓCₓ:H est hydrogénée par exposition à des vapeurs de HF (fluorure d'hydrogène) pendant 15 secondes, puis greffée avec des chaînes 10-carboxydécyl par une hydrosilylation photochimique de l'acide undécylénique (312 nm, 6mWcm⁻², pendant 3h), et finalement rincée à l'acide acétique (75°C, 30min) (Faucheux et al., 2006 Langmuir 22, 153-162 [31]). Le greffage est validé par spectroscopie infrarouge en mode de réflexion totale atténuée, en déposant de fines couches d'alliage silicium-carbone amorphe hydrogéné sur un substrat de silicium cristallin. La concentration en surface des chaînes carboxydécyl greffées est d'environ 10¹⁴ chaînes cm⁻². Les groupes carboxyles sont ensuite activés dans un mélange de N-éthyl,N'-diméthylaminopropyl-carbodiimide et N-hydroxysuccinimide (5 mM/5 mM) à 15°C pendant 1h30.

### 2) Protocoles d'immobilisation et d'hybridation

Deux sondes d'oligonucléotides sont utilisées : une sonde 25-mer [5' NH₂-(CH₂)₆-AGG-CGT-CGA-TTT-TAA-GAT-GGG-CGT-T-Cy5 3'] (SEQ ID NO. 1) nommée ON1 et une sonde non marquée 50-mer [5'AGC-ACA-ATG-AAG-ATC-AAG-ATC-ATT-GCT-CCT-CCT-GAG-CGC-AAG-TAC-TCC-GT-(CH₂)₆-NH₂ 3'] (SEQ ID NO. 2) nommée ON2. Les deux sondes, diluées à 10⁻⁵M dans 150 mM d'un tampon phosphate contenant 0,01% de SDS (sodium dodécyl sulfate) à pH 8,5, sont déposées par contact sur la surface activée en utilisant un robot de dépôt Biorobotics MicroGrid II. Une lame de verre commerciale fonctionnalisée par des groupements succinimidyl-ester sert de référence. Après dépôt, les sites succinimidyl-ester non amidés sont bloqués avec de l'éthanolamine (5.10⁻² M, pendant 15 min), puis les lames sont rinçées dans 0,1% SDS (pH 6.5), puis dans de l'eau ultrapure (Millipore) et séchées sous un flux d'azote. La surface est alors exposée à une solution de concentration 5.10⁻⁹ M contenant l'oligonucléotide complémentaire de la sonde ON2 et marqué Cy5 (5' AC-GGA-GTA-CTT-GCG-CTC-AGG-AGG-AGC-AAT-GAT-CTT-GAT-CTT-CAT-TGT-GCT- Cy5 3') (SEQ ID NO. 3) à 42°C pendant 1 heure dans du tampon Hyb2X commercialisé par Genewave. Des rinçages post-hybridation de 2 minutes sont ensuite réalisés, en utilisant 3 tampons commercialisés par Genewave (wash1 10X, wash2 10X et wash3 10X, tous dilués à 1X).

### 3) Mesures de la fluorescence

Les mesures *ex situ* sont réalisées à chaque étape du protocole décrit ci-dessus avec un scanner à fluorescence (Axon instrumentation Personal 4100A). Plusieurs cycles d'hybridation/déshybridation sont réalisés *in situ* (Marcy et al., 2008, BioTechniques 44, 913-920 [32]), grâce à une station d'hybridation en temps réel Hyblive (marque de commerce, Genewave). La déshybridation est réalisée *in situ à* 50°C dans la même chambre dans un mélange formamide et 2,5X SSC (tampon salin de citrate de sodium) (50:50 par vol.). Une image de fluorescence (temps d'intégration 1 seconde) a été prise toutes les 30 secondes.

### 4) Résultats

La Figure 1 a-b montre les deux structures prises en considération. La Figure 1 a représente une structure comprenant une couche a-Si_{0.85}C_{0.15}:H déposée sur une couche de métal, la couche de métal étant elle-même déposée sur du verre. La Figure 1 b représente une couche a-Si_{0.85}C_{0.15}:H déposée directement sur du verre. La Figure 1c montre le facteur théorique *F(d)* qui affecte l'intensité de la fluorescence (courbes en trait pleins et pointillés) en fonction de l'épaisseur *d* de a-Si_{0.85}C_{0.15}:H. *F(d)* est calculée à partir des équations d'optique classique (Born and Wolf, 1970. Principles of Optics, fourth ed. Pitman Press, Bath [33]), pour une excitation en incidence normale et une émission collectée sur un cône de demi-ouverture de 45°. L'augmentation possible du rendement quantique due au couplage optique entre les fluorophores et le réflecteur est négligée. L'émission est supposée non polarisée. Le comportement oscillatoire est de toute évidence un effet dû à l'interférence entre le rayon réfléchi directement à la surface et un rayon ayant traversé la couche a-Si_{0.85}C_{0.15}:H et qui a été réfléchi à l'interface réflecteur/couche ou verre/couche. Les interférences constructives se produisent quand la différence du chemin optique entre ces deux rayons est un multiple entier de la longueur d'onde. Cependant, cette condition précise ne peut pas être remplie simultanément pour l'excitation (longueur d'onde 635 nm) et pour l'émission (longueur d'onde 670 nm). Le facteur *F*(*d*) réel, qui affecte l'intensité de la fluorescence, est le produit de deux fonctions périodiques *f*_{exc}(*d*) (facteur à l'excitation) et *f*_{coll}*(d)* (facteur à la collection) avec des périodes légèrement différentes. Le résultat net est le faible amortissement des oscillations que l'on peut observer sur la Figure 1 c. De plus, puisque l'émission est collectée sur un angle de demi-ouverture de 45° et la différence du chemin optique dépend de l'angle d'incidence, la période d'oscillation pour le facteur de collection *f*_{coll}(*d*) est en réalité distribuée, ce qui amène une contribution supplémentaire à l'amortissement (l'absorption du matériau contribue aussi à cet amortissement bien que ce soit dans une mesure beaucoup moins importante).

En l'absence de réflecteur, la courbe calculée (Fig. 1c, tiretés) prédit un premier maximum à 112 nm sans augmentation de la fluorescence. En effet, un dépôt direct de λ/2 de la couche de a-Si_{0,85}C_{0,15}:H sur du verre est optiquement équivalent au verre « nu » et la seule différence avec les lames ordinaires est la différence de la chimie de greffage. Par la suite, lorsque l'on considère des structures sans réflecteur arrière, une épaisseur de 112 nm sera choisie.

En présence d'un réflecteur, la courbe calculée (Fig. 1c, trait continu) montre que le facteur *F* est égal à 7 pour une épaisseur optimale de 44 nm (l'épaisseur de la "couche λ/4" n'est pas exactement la moitié de celle de la "couche λ/2", parce que le changement de phase associé à la réflection du métal diffère de sa valeur idéale de π). Pour des épaisseurs élevées, le facteur *F* calculé diminue à 0,12, à cause de l'indice de réfraction élevé du a-Si_{0,85}C_{0,15}:H massif. Dans le cas idéal où les fluorophores sont libres dans l'air, *F* est égal à 1 par définition. Or, dans une architecture classique où les fluorophores sont déposés sur du verre, le facteur *F* est de 0,45. Ainsi, on obtient une amélioration d'un facteur d'environ 15 par rapport à une lame standard. Afin de tester ces prédictions théoriques, une couche est déposée en utilisant un cache mobile pendant l'étape de PECVD pour varier de manière continue l'épaisseur de la couche *d* sur le même substrat. L'intensité de la fluorescence mesurée sur les spots est montrée sur la Figure 1 c (diamants), en ajustant les échelles. Il y a donc une bonne adéquation entre la théorie et l'expérience. Dans ce qui suit, la structure optimisée consiste en une couche de a- Si_{0,85}C_{0,15}:H de 44 nm d'épaisseur déposée sur un réflecteur d'aluminium.

### 4.1) Comparaison des lames optimisées avec les lames commerciales

La Figure 2 compare l'intensité de fluorescence mesurée sur les deux structures définies précédemment (une lame de verre portant une couche de a-Si_{0,85}C_{0,15}:H de 112 nm d'épaisseur ("couche λ/2") (Fig. 2 b,e) et une couche de a-Si_{0,85}C_{0,15}:H de 44 nm d'épaisseur sur un réflecteur (Fig. 2 c,f)) avec celles mesurées sur une lame commerciale (a,d), après l'immobilisation de la sonde ON1 marquée Cy5 (Fig. 2 a,b,c) et l'hybridation de la sonde ON2 avec son complémentaire Cy5 (Fig. 2 d,e,f). Afin de pouvoir les comparer, les mêmes conditions ont été utilisées sur nos lames et sur les lames commerciales de verre.

L'augmentation de l'intensité de la fluorescence de (b) à (c) peut être attribuée à l'optique optimisée (effet « physique »). Puisqu'une couche λ/2 est optiquement équivalente au verre « nu », l'augmentation de la sensibilité de (a) à (b) de la Figure 2 peut être attribuée à l'amélioration de la chimie de surface (effet « chimique»). La Figure 2 montre que l'amélioration totale est de l'ordre d'un facteur 40, avec un facteur 13 attribué à l'optique et un facteur 3 attribué à la chimie de surface. Plusieurs points sont à noter : i) les lames basées sur la chimie Si-C (Fig. 2 (b) et (c)) ne manifestent essentiellement aucune perte du signal fluorescent après lavage, ce qui est une preuve de la stabilité de l'immobilisation covalente des sondes; ii) les spots (b) et (c) sont bien circulaires et reproductibles; iii) Malgré la forte augmentation du signal, le niveau du bruit de fond dans (c) reste bas, ce qui indique une faible fluorescence des substrats. La Figure 2 (d-f) montre le résultat d'une comparaison similaire au niveau de l'hybridation (oligomères sondes non marqués hybridés avec les cibles marquées au Cy5). Tandis que la lame commerciale (d) montre une amélioration de la fluorescence, les résultats de (e) et (f) sont essentiellement équivalents à ceux obtenus au niveau du spotting. Une fois de plus, le bruit de fond de la lame (f) est très faible, indiquant une très faible adsorption non spécifique des cibles. Le vieillissement des lames est testé en les conservant dans une solution de 1X SSC (pH∼7) pendant un mois. Aucune dégradation mesurable de la fluorescence n'a été observée.

Les figures 3A et 3B montrent que ce support permet d'enregistrer plusieurs cycles successifs d'hybridation-déshybridation sans perdre de sensibilité.

### EXEMPLE 2: ALLIAGES DE SILICIUM AMORPHE CARBONÉ EN TANT QUE FILMS DE REVÊTEMENT FINS DES NANOSTRUCTURES EN OR POUR UNE DOUBLE DETECTION : LA RÉSONANCE PLASMONIQUE DE SURFACE LOCALISÉE ET LA FLUORESCENCE

Des nanostructures en or (NSs) sont réalisées sur substrat de verre par une évaporation thermique d'un film fin d'or de 4 nm, suivie d'un démouillage du film par un traitement thermique rapide : un recuit à 500°C pendant 60 secondes sous N₂ (Szunerits et al., J. Phys. Chem. C 2008, 112, 8239-8243 [35]). La Figure 4B montre une image MEB (microscopie électronique à balayage) de la surface qui en résulte. La taille moyenne des nanostructures en or est d'environ 33 nm (Figure 4C). Ces interfaces présentent des bandes d'extinction fortes dans le spectre de transmission UV-Visible dues à l'excitation des plasmons de surface localisés (RPSL) sur les nanostructures d'or décrites. Les Nanostructures présentent un maximum d'absorption à λₘₐₓ = 575 nm, une absorption de 0,24 et une largeur à mi-hauteur (fwhm) de 120 nm.

Des films fins d'alliage silicium-carbone amorphe (a-Si₁₋ₓCₓ:H) sont ensuite déposés de manière contrôlée par PECVD en régime « basse puissance » tel que décrit par Solomon et al. ([19]) sur les surfaces présentant les nanostructures. La variation du taux de méthane dans le mélange de gaz ([CH₄]/{|CH₄]+[SiH₄]}) utilisé lors du dépôt permet d'ajuster le contenu final en carbone dans le film et ainsi d'ajuster les propriétés du matériau, en particulier l'indice de réfraction et la bande interdite (Solomon et al. [19], Solomon et al., Phys. Rev. B., 1988, 38, 13263-13270 [34]). L'influence du dépôt de films de a-Si₁₋ₓCₓ:H sur les propriétés RPSL a été étudiée. En effet, des investigations similaires sur ces mêmes nanostructures revêtues d'une couche de SiOx de 20nm (n=1,48-1x10⁻⁵i) ont montré un déplacement du maximum d'absorption vers les courtes longueurs d'onde de 7,4 nm avec une augmentation de l'absorption de 0,029 dans l'eau (Szunerits et al., [35]). Pour faire cette étude, des films de a-Si₁₋ₓCₓ:H de 20nm d'épaisseur présentant des taux de carbone allant de 3 % à 37 % sont déposés et l'effet du dépôt sur le spectre de transmission UV-Visible de l'interface est ensuite recherché (Figure 5). On remarque que le dépôt des films de a-Si₁₋ₓCₓ:H déplace les bandes RPSL vers les longueurs d'onde plus élevées tout en augmentant leur largeur à mi-hauteur. La Figure 5 montre qu'un faible taux de carbone résulte en un déplacement plus faible. En outre, une augmentation du taux de carbone dans le film de a-Si₁₋xCₓ:H au-delà de 20 % diminue l'absorption et augmente la largeur à mi-hauteur. Ces comportements sont liés à un changement dans les parties réelles et imaginaires des indices de réfraction des alliages de a-S₁₋ₓCₓ:H formés. Ceux-ci varient entre n=4,2-0,07i pour a-Si:H et n=1,81-1,07×10⁻³i pour a-Si_{0,63}C_{0,37}:H, respectivement. Le film de a-Si₁₋ₓCₓ:H avec un taux de carbone de 20 % présente des caractéristiques spectrales favorables en termes de sensibilité et d'intensité d'absorption avec un maximum d'absorption situé à λₘₐₓ = 614 nm, une absorption au pic de 0,29 et une largeur à mi-hauteur de 150 nm.

L'influence de l'épaisseur de a-Si_{0,80}C_{0,20}:H sur le décalage du maximum d'absorption RPSL est maintenant examinée. En effet, un comportement oscillatoire a été rapporté récemment pour les nanoparticules d'or revêtues d'un mince film de SiOₓ dans l'eau (Szunerits et al., [35]). La Figure 6A montre les changements dans le spectre de transmission UV-Visible lorsque les nanoparticules d'or sont revêtues d'un film de a-Si_{0,80}C_{0,20}:H d'épaisseur croissante. Le spectre représentant le décalage de λₘₐₓ en fonction de l'épaisseur du film de a-Si_{0,80}C_{0,20}:H montre un comportement oscillatoire avec une période de 125 nm et une amplitude Δλₘₐₓ de 40 nm (Figure 6B). Le dépôt d'un film de a-Si_{0,80}C_{0,20}:H de 5 nm entraîne un déplacement de λₘₐₓ de 20 nm vers les grandes longueurs d'onde par rapport à des nanostructures en or non revêtues. La sensibilité a été déterminée par immersion de ces différentes structures dans des solvants d'indices de réfraction différents. Un changement de Δλₘₐₓ de 9 nm par unité d'indice de réfraction est observé pour un film de a-Si_{0,80}C_{0,20}:H de 20 nm, tandis qu'un changement de 50 nm par unité d'indice de réfraction est observé pour une couche de 5 nm d'épaisseur. Cette sensibilité est bien en bon accord avec des travaux déjà publiés (Haynes et Van Duyne, J. Phys. Chem., 2001, 105, 5599-5611 [36]). L'utilisation des interfaces revêtues de films de 150-200 nm est possible pour des études de détection à longue distance, avec un décalage de Δλₘₐₓ de 50 nm par unité d'indice de réfraction.

La stabilité chimique des interfaces RPSL revêtues d'un film de a-Si_{0,80}C_{0,20}:H de 5 nm a été testée par le suivi du signal RPSL des interfaces immergées dans l'eau, l'éthanol et un tampon phosphate à température ambiante. Aucun changement dans le signal RPSL n'a été observé lors de ces immersions successives de 2h chacune à température ambiante. Il est ainsi montré que ces interfaces hybrides peuvent supporter les étapes de fonctionnalisation et sont stables durant les mesures cinétiques.

Les interfaces RPSL sont ensuite fonctionnalisées pour permettre l'immobilisation de molécules biologiques. Les surfaces des films a-Si_{0,80}C_{0,20}:H sont tout d'abord hydrogénés. La terminaison hydrogénée a été obtenue en exposant l'interface pendant 15 secondes à des vapeurs de HF 50%. Ensuite, un greffage d'acide undécylénique est effectué par hydrosilylation sous irradiation photochimique à 312 nm pendant 3 heures suivi par un rinçage à l'acide acétique à 75°C pendant 30 minutes (Faucheux et al., Langmuir 2006, 153-162 [31]). Comme le montre la Figure 7A, ceci permet un greffage de groupes carboxydécyles via des liaisons Si-C (Voicu et al., Langmuir 2004, 20, 11713-11720 [37]). La Figure 7B montre le spectre ATR FT-IR (Absorption Infrarouge par Transformée de Fourier en réflexion totale atténuée) d'une surface a-Si_{0,80}C_{0,20}:H déposée sur un prisme ATR de silicium puis hydrogénée référencé au spectre du prisme de silicium cristallin nu. Le pic intense à 2100 cm⁻¹ confirme la présence d'une grande quantité de liaisons silicium-hydrogène dans le matériau. Les bandes détectées à 2890 cm⁻¹ et 2953 cm⁻¹ indiquent que le carbone dans le film est majoritairement sous forme de CH₃ (Solomon et al. [19]).

Les bandes vibrationnelles C=O à 1711 cm⁻¹, et CH₂ à 2855 cm⁻¹ et 2930 cm⁻¹ dans la Figure 7C indiquent le greffage de groupes carboxydécyles sur la couche mince a-Si_{0,80}C_{0,20}:H. L'intégration de l'aire des pics de la bande C=O permet de déterminer la densité moléculaire des groupes carboxydécyles liés : N=7,8±0,2x10¹³ mol cm⁻². Cette valeur, inférieure à celle du silicium cristallin (N=2,5±0,2x10¹⁴ mol cm⁻²) (Moraillon et al., Phys. Chem. C 2008, 112, 7158-7167 [38]) est probablement due à une rugosité de la surface et à la présence de groupes méthyles en surface.

La fonction acide est par la suite convertie en un groupement ester dans une solution de EDC/NHS (N-éthyl-N'-[3-diméthylaminopropyl] carbodümide/N-hydroxy succinimide) à 5 mM/5 mM pendant 1h30 à température ambiante. La Figure 8 montre le spectre FT-IR de l'interface avant et après la conversion de l'acide en ester. La disparition complète du pic caractéristique de l'acide à 1711 cm⁻¹ et l'apparition de nouveaux pics à 1744, 1788 et 1816 cm⁻¹, dues aux modes d'élongation des trois fonctions carbonyles de l'ester de succinimidyle, sont cohérentes avec la formation des esters activés (Voicu et al. [37]). La quantité des groupements ester formés est estimée à N= 7,2±0,2 ×10¹³ mol cm⁻² (Moraillon et al. [38]). Ceci correspond à une efficacité d'activation de 92 %.

La réactivité des groupes NHS sur la surface pour les transformations chimiques envisagées est démontrée par réaction d'aminolyse avec l'éthanolamine. Le spectre ATR-FTIR de la surface activée par l'ester après réaction avec l'éthanolamine est montré sur la Figure 8c. On observe l'apparition de pics à 1651 et 1551 cm⁻¹ attribués à la fonction carbonyle et à la vibration CNH de l'amide. La quantité des groupements amides formés est N= 7,2±0,2 ×10¹³ cm⁻². Les pics carboxyles restants à 1711 cm⁻¹ révèlent les acides non activés (Moraillon et al. [38]).

En résumé, le développement des interfaces plasmoniques hybrides basées sur le dépôt d'alliages silicium-carbone amorphes hydrogénés sur des nanostructures en or présente l'intérêt de pouvoir greffer aisément et de façon bien contrôlée des fonctions carboxyles directement sur l'interface via des liaisons Si-C. De telles fonctions peuvent réagir facilement avec les terminaisons amines réactives présentes dans de nombreux composés biologiques.

Par ailleurs ces interfaces hybrides permettent d'obtenir conjointement une bonne sensibilité pour la détection de la RPSL et une exaltation de la fluorescence de sondes greffées. Cette capacité est démontrée ici en greffant des oligonucléotides sondes à l'interface, et en réalisant sur le même support le suivi par fluorescence, in situ et en temps réel, de cycle d'hybridation et déshybridation des sondes avec leurs cibles complémentaires, et le suivi de la cinétique d'hybridation par RPSL.

De manière analogue à l'exemple 1, des études d'exaltation de fluorescence, cette fois d'origine plasmonique, sont réalisées.

Le protocole d'immobilisation est le suivant. Deux sondes d'oligonucléotides sont utilisées : une sonde 25-mer [5' Cy5-AGG-CGT-CGA-TTT-TAA-GAT-GGG-CGT-T-(CH₂)₆-NH2 3'] (SEQ ID NO. 4) nommée ON4 et une sonde non marquée 25-mer [5'-NH₂-(CH₂)₆-AAC-GCC-CAT-CTT-AAA-ATC-GAC-GCC-T-3'] (SEQ ID NO. 5) nommée ON5. Les deux sondes, diluées à 10⁻⁵M dans 150 mM d'un tampon phosphate (PBS) contenant 0,01% de SDS (sodium dodécyl sulfate) à pH 8,5, sont déposées sur la surface activée. La cible utilisée est un 25-mer [5' Cy5-AGG-CGT-CGA-TTT-TAA-GAT-GGG-CGT-T -3'] (SEQ ID NO. 6) nommée ON6.

L'immobilisation est réalisée par spotting sur la surface activée pour les mesures de fluorescence suivant la procédure décrite à l'exemple 1. Pour les mesures RPSL, les oligonucléotides sont immobilisés sur toute la lame en laissant la solution réagir pendant 14h au sein d'une chambre d'hybridation.

### Mesure de la fluorescence

La sensibilité obtenue est d'abord évaluée en mesurant la fluorescence avec un scanner (Axon instrumentation Personal 4100A) après l'immobilisation de la sonde ON4 marquée Cy5 et l'hybridation de la sonde ON5 avec son complémentaire Cy5. Plusieurs cycles d'hybridation/déshybridation sont réalisés et suivis *in situ* par fluorescence (Marcy et al., 2008, BioTechniques 44, 913-920 [32]), grâce à une station d'hybridation en temps réel Hyblive (marque commerciale) (Genewave). La déshybridation est réalisée *in situ* à 50°C dans la chambre Hyblive dans un mélange formamide et 2,5X SSC (tampon salin de citrate de sodium) (50:50 par vol.). Une image de fluorescence (temps d'intégration 1 seconde) est enregistrée toutes les 30 secondes.

La figure 9 montre sous forme d'histogrammes l'intensité de la fluorescence enregistrée dans le cas d' a-Si_{0,80}C_{0,20}:H de 5 nm déposée sur les nanostructures en comparaison avec une lame commerciale Afin de pouvoir les comparer, les mêmes conditions d'immobilisation et d'hybridation ont été utilisées sur nos lames et sur les lames commerciales de verre. La Figure 9 montre que l'amélioration totale est de l'ordre d'un facteur 17 par rapport à la lame commerciale. Cette sensibilité permet le suivi en temps réel de l'hybridation. La figure 10 montre que ce support permet tout comme dans l'exemple 1, d'enregistrer plusieurs cycles successifs d'hybridation-déshybridation sans perdre de sensibilité.

Ce même capteur est utilisé afin de suivre en fonction du temps l'évolution du pic RPSL pendant l'hybridation. Le décalage du pic est quantifié en observant la modification d'absorption pour une longueur d'onde fixe bien choisie, de préférence dans la zone de pente maximale, sur le côté des grandes longueurs d'ondes du pic RPSL. Durant la réaction, les caractéristiques du pic telles que son intensité ou la position du maximum d'absorption changent, induisant ainsi l'évolution de l'absorption à la longueur d'onde choisie. La surface comprenant les sondes d'oligonucléotides ON4 immobilisées est placée dans du tampon PBS et 0,01% de SDS (sodium dodécyl sulfate) à pH 8,5 afin d'enregistrer une mesure de référence. Puis, le tampon est retiré et la surface est exposée à une solution d'ON5 de concentration 500nM. La figure 11 illustre la cinétique d'hybridation ainsi obtenue à partir du décalage du pic RPSL en fonction du temps.

En permettant cette double détection par RPSL et par fluorescence, ces nouveaux types d'interfaces réutilisables ouvrent de nouvelles perspectives d'analyse, en particulier dans le contexte des mesures cinétiques et des caractérisations quantitatives.

### EXEMPLE 3 : RÉSONANCE PLASMONIQUE DE SURFACE SUR DES FILMS EN OR REVÊTUS DE COUCHES MINCES D'ALLIAGES SILICIUM-CARBONE AMORPHES.

Des films de silicium amorphe carboné sont déposés par PECVD en régime « basse puissance » (Solomon et al., Physical Rev. B., 1988, 38, 13263 [34]) . Les paramètres suivants sont utilisés : pression = 35 mTorr, température = 250°C, puissance = 0,06 W cm⁻², débit de gaz = 20 cm³ min⁻¹. Le taux final en carbone (C) dans le matériau peut être ajusté en variant la proportion de méthane dans le mélange gazeux ([CH₄]/{|CH₄]+[SiH₄]}). Pour le dépôt d'un film mince avec la stoechiométrie suivante : a-Si_{0,63}C_{0,37}:H, 94 at.% de [CH₄] sont utilisés, tandis que pour un film a-Si_{0,80}C_{0,20}:H, 51 at.% sont nécessaires. L'influence du taux de carbone d'un film de a-Si₁₋ₓCₓ:H sur le signal RPS est déterminée pour un taux compris entre 20 et 37 %. L'influence de l'épaisseur du film est également étudiée entre 0 et 10 nm. La Figure 13 montre les courbes de RPS expérimentales superposées aux courbes théoriques de Fresnel. Pour des structures présentant des épaisseurs de film égales, les différences dans les courbes de RPS sont dues à la modification de l'indice de réfraction. Un contenu plus important en carbone induit une diminution de l'indice de réfraction à 633 nm de n=2,63-5×10⁻⁴i (a-Si_{0,80}C_{0,20}:H) à n=1,815-1,07×10⁻³i (a-Si_{0,63}C_{0,37}:H), respectivement. Augmenter le contenu en carbone diminue l'indice de réfraction, mais résulte aussi en une augmentation de sa partie imaginaire. Avec un revêtement possédant un contenu en carbone de 37%, on constate une diminution dans l'efficacité de couplage photon-plasmon et un élargissement des courbes RPS. La meilleure interface en termes de signal RPS est obtenue en utilisant un couche de 50 nm d'or déposée sur une couche de 5 nm de titane (5 nm Ti/50 nm Au) et revêtue d'un film de 5 nm de a-Si_{0,63}C_{0,37}:H. La stabilité chimique de l'interface est étudiée par immersion pendant 6 heures dans 0,1 M H₂SO₄ et 0,1 M NaOH. Aucun changement dans le signal RPS n'est enregistré après ces traitements, ce qui indique que le film de a-Si_{0,63}C_{0,37}:H d'épaisseur 5nm stabilise efficacement la surface métallique, et supportera des étapes de fonctionnalisation chimique ultérieures. Des mesures électriques et électrochimiques (voltampérométrie cyclique) ont été réalisées sur différentes interfaces. Lors de la mesure de la conductivité dans le plan, une structure multicouches telle que Ti/Au/ a-Si₁₋ₓCₓ:H peut être décrite par trois résistances en parallèle, la résistance R de l'interface étant égale à : 1/R=1/R_{Ti} + 1/R_{Au} + 1/Ra-Si₁₋ₓCₓ (R_{Ti} étant la résistance de la couche de titane, R_{Au} celle de la couche d'or et Ra-Si₁₋ₓCₓ celle de la couche d'alliage). La Figure 14A montre l'évolution de la résistivité des interfaces hybrides en fonction de l'épaisseur pour 3 taux de carbone différents. La résistivité décroît avec le contenu en carbone et augmente avec l'épaisseur de la couche, atteignant une limite lorsque la couche est épaisse d'environ 20 nm. Ceci suggère que la résistivité globale est déterminée par la résistivité de la couche d'or plutôt que par la résistivité du revêtement. Ceci est confirmé par des expériences de voltampérométrie cyclique en utilisant Fe(CN)₆⁴⁻ comme une sonde redox (Figure 14B). L'or revêtu de 5 nm de a-Si_{0,63}C_{0,37}:H montre une cinétique de transfert de charges similaire à celle de l'or seul, tandis que lorsqu'il est revêtu de 5 nm de a-Si_{0,67}C_{0,33}:H ou de a-Si_{0,80}C_{0,20}:H la cinétique de transfert de charges de l'électrode est partiellement bloquée.

Le film a-Si_{0,63}C_{0,37}:H est partiellement oxydé et une fine couche de SiO₂ de passivation est formée sur sa surface après exposition au milieu ambiant. La fine couche oxydée peut être retirée par simple exposition de l'interface pendant 15 secondes à des vapeurs de HF pour obtenir une surface terminée par des liaisons Si-Hₓ. La surface hydrogénée du film a-Si_{0,63}C_{0,37}:H est ensuite immergée dans l'acide undécylénique (CH₂=CH-(CH₂)₈-COOH) et soumise à une irradiation photochimique à 312 nm pendant 3 h. Ce traitement conduit à la formation d'une monocouche organique liée de manière covalente à la surface par des liaisons Si-C (Figure 12B). La spectroscopie de photoélectrons X (XPS) et des mesures d'angle de contact sont utilisées pour analyser la composition chimique et la nature de la liaison chimique sur la surface du a-Si_{0,63}C_{0,37}:H avant et après la modification avec l'acide undécylénique. Un changement dans l'angle de contact de 95±1° pour le a-Si_{0,63}C_{0,37}:H à 75±1° pour le a-Si_{0,63}C_{0,37}:H modifié par l'acide undécylénique indique que la réaction s'est produite. Le spectre XPS de a-Si_{0,63}C_{0,37}:H fraîchement déposé est montré sur la Figure 15a. A cause du grand facteur de sensibilité de l'or en XPS et de la faible épaisseur du film de a-Si_{0,63}C_{0,37}:H, le spectre est dominé par les signaux de l'or : pics à 84 et 88 eV (niveaux d'énergie Au 4f), 335 et 353 eV (Au 4d), 547 eV(Au 4p_{3/2}), et 643 eV (Au 4p_{1/2}). En plus des pics de l'or, les signaux à 285 eV pour C 1s, 532 eV pour O 1s et 153 eV pour Si 2s sont également observés. Le signal Si 2p à 99 eV est affecté par le satellite plasmonique intense associé aux pics Au 4f. Les rapports C/Si (carbone/silicium) et C/O (carbone/oxygène) sont de 4 et de 2,6, respectivement. Le spectre en haute résolution de la bande C 1 s est montré sur la Figure 16a. Cette bande peut être décomposée en 4 composantes. Le pic principal est centré à 283,9 eV et est caractéristique des liaisons C-Si, tandis que les signaux à 284,8, 286,4 et 287,6 eV correspondent aux structures (CH₂)ₙ, C-O et C=O. Le processus de formation du film de a-Si_{0,63}C_{0,37}:H utilisant de fortes concentrations de méthane, on peut penser que le matériau obtenu contient non seulement des groupements Si-CH₃ mais également des groupements (CH₂)ₙ (Suzuki et al., Jpn. J. App. Sci., 1990, 29, L663 [39]). Le spectre XPS de a-Si_{0,63}C_{0,37}:H après greffage de groupements carboxydécyles montre les mêmes bandes caractéristiques que la surface non modifiée (Figure 15b). Toutefois, le rapport de C/Si et C/O augmente à 10,0 et 4,5, respectivement. De plus, le spectre C1s en haute résolution, montré sur la Figure 16b, peut être décomposé en cinq composantes différentes. Le pic principal centré à 284,7 eV est caractéristique des groupements CH₂ des chaînes alkyles et des structures (CH₂)ₙ, tandis que les autres pics à 284,0, 286,1 et 287,3 eV correspondent aux fonctions C-Si, C-O et C=O comme cela a été vu pour les interfaces non modifiées. Une bande additionnelle à 288,6 eV caractéristique des liaisons O-C=O est aussi présente, attestant de la fonctionnalisation de la surface avec l'acide undécylénique.

Le groupe fonctionnel acide carboxylique est particulièrement utile pour sa réactivité chimique et ses propriétés de mouillage (Moraillon et al., [38] ; Blankespoor et al., Langmuir, 2005, 21, 3362 [40]). Les interfaces RPS fonctionnalisées par un groupement carboxyle sont utilisées avantageusement pour le couplage avec des ligands terminés par une amine comme cela est montré sur la Figure 17. Les systèmes avidine-biotine ont souvent été utilisés comme systèmes d'assemblage par affinité pour le développement de biocapteurs (Wayment et Harris, J. M. Anal. Chem., 2009, 81, 336 [41]). De tels systèmes peuvent être facilement utilisés ici en couplant un groupement biotine situé en position terminale sur un groupement amino-alkyle (biotine-NH₂). En partant d'une surface à terminaisons COOH, tout d'abord l'activation chimique des fonctions acides en esters de succinimidyle est tout d'abord réalisée comme décrit à l'exemple 2 en utilisant du N-hydroxysuccinimide (NHS) en présence de N-éthyl-N'-(3-diméthylaminopropyl) carbodiimide. Ensuite, les esters ainsi obtenus réagissent par aminolyse en conditions physiologiques avec la biotine-NH₂. Le groupement biotine se trouve alors greffé à la couche moléculaire par formation d'une liaison amide. L'interface modifiée par la biotine présente un angle de contact de 70 °.

D'après les courbes de réflectivité (Figure 18A), la liaison de la biotine modifiée NH₂ à la surface résulte en un changement d'angle de la RPS que l'on sait modéliser par une variation d'épaisseur équivalente de 3,1nm, ce qui est cohérent avec la dimension moléculaire de la biotine non-modifiée (0,52 nm x 1,00 nm x 2,10 nm) (Lin et al., Langmuir 2000, 18, 788 [29]). La reconnaissance moléculaire biotine-streptavidine (5,60 nm x 5,00 nm x 0,40 nm) (Karajanagi et al., Langmuir 2004, 20, 11594, [42]) est suivie par RPS et la cinétique de la réaction de couplage est montrée sur la Figure 18B. Comme attendu, une forte hausse (changement d'angle de 0,25°) est observée pour les interfaces modifiées par la biotine tandis que seulement une petite augmentation a été observée pour celle non modifiée. Le changement d'angle de 0,25° correspond à l'épaisseur de la couche de streptavidine d'environ 6,3 nm (Knoll et al., Colloid. Surf. A : Physicochem. Eng. Aspects, 2000. 161, 115-137 [43]).

En résumé, une architecture de substrat RPS fondée sur le revêtement d'un substrat en or par des alliages silicium carbone amorphes d'épaisseur 5 nm est réalisable par dépôt de films minces de a-Si1-xCx:H suivi par le greffage de monocouches organiques stables par des liaisons Si-C comme montré dansla figure 12. En vue d'une analyse biologique, un groupement biotine peut-être greffé sur cette couche moléculaire par formation d'une lisaon amide. L'intérêt des nouvelles interfaces est illustré ici dans l'analyse de l'interaction spécifique avidine-biotine. Cette nouvelle architecture ouvre de nombreuses possibilités de fabrication d'interfaces RPS pour l'anlayse des interactions moléculaires.

### Listes des références

[1] US6194223
[2] WO2005040770
[3] US2006066249
[4] US2009045351
[5] US6194223
[6] US5449918
[7] US2007273884
[8] US2002085204
[9] EP 1422315
[10] WO02052260
[11] WO2007036544
[12] US6726881
[13] A. J. Haes, R. P. Van Duyne, J. Am. Chem. Soc. 2002, 124, 10596-10604
[14] M. E. Stewart, C. R. Anderton, L. B. Thompson,J. Maria, S. K. Gray, J. A. Rogers, R. G. Nuzzo, Chem. Rev. 2008, 108, 494-521
[15] N. Blow, Nature Methods 2009, 6, 389-393)
[16] US2004096893
[17] C. Dahmen, A. Janotta, D. Dimova-Malinovska, S. Marx, B. Jeschke, B. Nies, H. Kessler and M. Stutzmann, (Thin Solid Films 2003, 427, 201-207)
[18] A. Lehner, G. Steinhoff, M. S. Brandt, M. Eickhoff, M. Stutzmann, J. Appl. Phys. 2003, 94, 2289-2294
[19] I.Solomon, M. P. Schmidt, H. Tran-Quoc, Phys. Rev. B., 1988, 38, 9895-9901
[20] L. R. Tessler, I. Solomon, Phys. Rev. B 1995,.52, 10962-10971
[21] J.I. Pankove, Hydrogenated Amorphous Silicon, Semiconductors and Semimetals Vol.21, part A:

### Preparation and Structure, Academic, Oralndo, 1984.

[22] R. A. Street, Hydrogenated Amorphous Silicon, 1991, Cambridge University Press, Cambridge
[23] Edith Chow, Elicia L.S. Wong, Till Böcking, Quynh T. Nguyen, D. Brynn Hibbert and J. Justin Gooding, Sensors and Actuators B 111-112 (2005) 540-548
[24] Y. Chen et al. , Nano Letters, vol. 7, No. 3, 690-696, 2007
[25]. A. Bek et al. , Nano Letters, vol. 8, No. 2, 485-490, 2008
[26] Aslan et al., Current Opinion in Chemical Biology, 9 :538-544, 2005 ([23]).
[27] P. Neuzil et J. Reboud (Anal. Chem. 2008, 80, 6100-6103
[28] WO2008132325
[29] Lin et al. Langmuir 2000, 18, 788
[30] Ciampi et al., 2007 langmuir 23,9320-9329
[31] Faucheux et al., 2006 Langmuir 22, 153-162
[32] Marcy et al., 2008, BioTechniques 44, 913-920
[33] Born and Wolf, 1970. Principles of Optics, fourth ed. Pitman Press, Bath
[34] Solomon et al., Phys. Rev. B., 1988, 38, 13263-13270
[35] Szunerits et al., J. Phys. Chem. C 2008, 112, 8239-8243
[36] Haynes et Van Duyne, J. Phys. Chem., 2001, 105, 5599-5611
[37] Voicu et al., Langmuir 2004, 20, 11713-11720
[38] Moraillon et al., Phys. Chem. C 2008, 112, 7158-7167
[39] Suzuki et al., Jpn. J. App. Sci., 1990, 29, L663
[40] Blankespoor et al., Langmuir, 2005, 21, 3362
[41] Wayment et Harris, J. M. Anal. Chem., 2009, 81, 336
[42] Karajanagi et al., Langmuir 2004, 20, 11594
[43] Knoll et al., Colloid. Surf. A : Physicochem. Eng. Aspects, 2000. 161,115-137
[44] de Smet et al., J. Am. Chem. Soc. 2003, 125, 13916-13917
[45] Suo et al., Langmuir 2008, 24,4161-4167
[46] FR2585730
[47] FR2529582
[48] J. M. Buriak, Chem. Rev. 102, 1271 (2002)
[49] R. Boukherroub, Curr. Opin. Solid State Mater. Sci. 9, 66 (2005)
[50] R. Boukherroub and S. Szunerits, Electrochemistry at the Nanoscale, Nanostructure Science and technology Series. Eds. P. Schmuki and S. Virtanen, Springer-Verlag New York, LLC, 2008, pp: 183-248
[51] C. Henry de Villeneuve, J. Pinson, M. C. Bernard, P. Allongue, J. Phys. Chem. B 101, 2415 (1997)
[52] S. Fellah, A. Teyssot, F. Ozanam, J.-N. Chazalviel, J. Vigneron, A. Etcheberry, Langmuir 18, 5851, (2002)
[53] A. Teyssot, A. Fidélis, S. Fellah, F. Ozanam, J.-N. Chazalviel, Electrochim. Acta 47, 2565 (2002).53
[54] C. Gurtner, A.W. Wun, M. Sailor, Angew. Chem. Int. Ed. 38, 1966 (1999)
E.G. Robins, M.P. Stewart, J.M. Buriak, Chem. Commun. 2479 (1999)
. K.L. Prime et al., J. Am. Chem. Soc., 1993, 115,10714-10721
T. Böcking et al., Langmuir, 2005, 21, 10522-10529
J. P. Conde, A. C. Pimentel, A. T. Pereira, A. Gouvêa, D. M. F. Prazeres, V. Chu, J. Non-Cryst. Solids 2008, 354, 2594-2597.

## Revendications

1. Utilisation d'une couche (CS) continue à base de silicium amorphe hydrogéné ou non hydrogéné pour la fixation d'une sonde, dans un procédé d'analyse choisi parmi un procédé de suivi de synthèse biochimique, un procédé de détection de molécules, un procédé de détection d'interaction entre molécules et un procédé de criblage moléculaire, par fluorescence et/ou par résonance plasmonique de surface (RPS), dans laquelle ladite couche (CS) a une épaisseur inférieure à 200 nm.

2. Utilisation selon la revendication 1, dans laquelle ladite couche (CS) a une épaisseur choisie dans l'intervalle des valeurs qui correspondent au premier maximum de réflectivité sur un graphique représentant la réflectivité de la structure d'analyse en fonction de l'épaisseur de ladite couche (CS), pour les différentes longueurs d'onde des rayonnements utilisés pour l'excitation et la détection au cours de l'analyse.

3. Utilisation selon l'une quelconque des revendications 1 ou 2, dans laquelle ladite couche (CS) a une fraction atomique [C]/([C+Si]) comprise entre 0 et 0,4.

4. Utilisation selon l'une quelconque des revendications précédentes, dans laquelle ladite couche (CS) est déposée sur un substrat (S).

5. Utilisation selon l'une quelconque des revendications 1 à 3, dans laquelle ladite couche (CS) est déposée sur une couche métallique (M).

6. Utilisation selon la revendication 5, dans laquelle ladite couche métallique est continue ou discontinue.

7. Utilisation selon la revendication 5, dans lequel ladite couche métallique est discontinue et comprend des agrégats présentant au moins deux dimensions submicroniques.

8. Utilisation selon l'une quelconque des revendications 5 à 7, dans laquelle ladite couche métallique comprend un métal choisi parmi le cuivre, l'argent, l'or, le rhodium, le lithium, le sodium, le potassium, le rubidium, le césium, le magnésium, le calcium, le strontium, le baryum, le zinc, le cadmium, l'aluminium, le gallium, l'indium, le plomb ou un mélange d'au moins deux de ces métaux.

9. Utilisation selon l'une quelconque des revendications précédentes, dans laquelle ladite couche (CS) comprend à sa surface une couche moléculaire (CM).

10. Utilisation selon la revendication 9, dans laquelle ladite couche moléculaire comprend en outre un moyen de fixation d'un ligand, d'une molécule organique, d'une biomolécule, d'un microorganisme ou d'une partie d'un microorganisme à sa surface.

11. Utilisation selon l'une quelconque des revendications 1 à 9, dans laquelle des ligands, des molécules organiques, des biomolécules, des microorganismes ou parties de microorganismes sont présents à la surface de ladite couche (CS).

12. Utilisation selon l'une quelconque des revendications précédentes, dans laquelle la résonance plasmonique de surface est localisée (RPSL).

13. Utilisation selon l'une quelconque des revendications précédentes, dans laquelle le procédé d'analyse est un procédé choisi parmi un procédé de suivi de l'évolution d'une synthèse biochimique, un procédé de détection d'une interaction entre ligands, petites molécules organiques, biomolécules, un procédé de détection d'une interaction entre une biomolécule et un microorganisme ou une partie d'un microorganisme, un procédé de criblage moléculaire.

14. Utilisation selon l'une quelconque des revendications précédentes, dans laquelle ledit procédé d'analyse est un procédé d'analyse par fluorescence et par résonance plasmonique de surface (RPS), localisée ou non localisée.

15. Utilisation selon l'une quelconque des revendications précédentes, dans laquelle ledit procédé d'analyse est réalisé en milieu liquide.

## Patentansprüche

1. Verwendung einer durchgehenden Schicht (CS) auf Basis von hydriertem oder nicht-hydriertem amorphem Silizium zur Bindung einer Sonde in einem Analyseverfahren, welches ausgewählt ist aus einem Verfahren zur Verfolgung der biochemischen Synthese, einem Verfahren zum Nachweis von Molekülen, einem Verfahren zum Nachweis von Interaktion zwischen Molekülen und einem Verfahren des molekularen Screenings, mittels Fluoreszenz und/oder Oberflächenplasmonenresonanz (SPR), wobei besagte Schicht (CS) eine Dicke von weniger als 200 nm aufweist.

2. Verwendung nach Anspruch 1, wobei besagte Schicht (CS) eine Dicke besitzt, welche ausgewählt ist aus dem Intervall der Werte, die dem ersten Reflexionsmaximum auf einer Grafik entsprechen, die das Reflexionsvermögen der Analysestruktur in Abhängigkeit von der Dicke der besagten Schicht (CS) für die verschiedenen Wellenlängen der Strahlungen, die im Rahmen der Analyse zur Anregung und dem Nachweis eingesetzt werden, wiedergibt.

3. Verwendung nach einem der Ansprüche 1 oder 2, wobei besagte Schicht (CS) einen Atomanteil [C]/([C+Si]) im Bereich zwischen 0 und 0,4 besitzt.

4. Verwendung nach einem der vorstehenden Ansprüche, wobei besagte Schicht (CS) auf einem Substrat (S) aufgebracht ist.

5. Verwendung nach einem der Ansprüche 1 bis 3, wobei besagte Schicht (CS) auf einer metallischen Schicht (M) aufgebracht ist.

6. Verwendung nach Anspruch 5, wobei besagte metallische Schicht durchgehend oder unterbrochen ist.

7. Verwendung nach Anspruch 5, wobei besagte metallische Schicht unterbrochen ist und Aggregate umfasst, welche mindestens zwei Größen im Submikron-Bereich aufweisen.

8. Verwendung nach einem der Ansprüche 5 bis 7, wobei besagte metallische Schicht ein Metall umfasst, welches ausgewählt ist aus Kupfer, Silber, Gold, Rhodium, Lithium, Natrium, Kalium, Rubidium, Cäsium, Magnesium, Calcium, Strontium, Barium, Zink, Cadmium, Aluminium, Gallium, Indium, Blei oder einer Mischung aus mindestens zwei dieser Metalle.

9. Verwendung nach einem der vorstehenden Ansprüche, wobei besagte Schicht (CS) an ihrer Oberfläche eine molekulare Schicht (CM) umfasst.

10. Verwendung nach Anspruch 9, wobei besagte molekulare Schicht des Weiteren ein Mittel zur Bindung eines Liganden, eines organischen Moleküls, eines Biomoleküls, eines Mikroorganismus oder eines Teils eines Mikroorganismus an ihrer Oberfläche umfasst.

11. Verwendung nach einem der Ansprüche 1 bis 9, wobei Liganden, organische Moleküle, Biomoleküle, Mikroorganismen oder Teile von Mikroorganismen an der Oberfläche der besagten Schicht (CS) vorhanden sind.

12. Verwendung nach einem der vorstehenden Ansprüche, wobei die Oberflächenplasmonenresonanz lokalisiert ist (LSPR).

13. Verwendung nach einem der vorstehenden Ansprüche, wobei das Analyseverfahren ein Verfahren ist, welches ausgewählt ist aus einem Verfahren zur Verfolgung der Entwicklung einer biochemischen Synthese, einem Verfahren zum Nachweis einer Interaktion zwischen Liganden, kleinen organischen Molekülen, Biomolekülen, einem Verfahren zum Nachweis einer Interaktion zwischen einem Biomolekül und einem Mikroorganismus oder einem Teil eines Mikroorganismus, einem Verfahren des molekularen Screenings.

14. Verwendung nach einem der vorstehenden Ansprüche, wobei besagtes Analyseverfahren ein Analyseverfahren mittels Fluoreszenz und mittels lokalisierter oder nicht-lokalisierter Oberflächenplasmonenresonanz (SPR) ist.

15. Verwendung nach einem der vorstehenden Ansprüche, wobei besagtes Analyseverfahren in einem flüssigen Medium durchgeführt wird.

## Claims

1. Use of a continuous hydrogenated or non-hydrogenated amorphous silicon layer (CS) for the attaching of a probe, in an analysis method chosen from among a method for following up biochemical synthesis, a method for detecting molecules, a method for detecting an interaction between molecules and a molecular screening method, by fluorescence and/or by surface plasmon resonance (SPR), wherein said layer (CS) has a thickness less than 200 nm.

2. Use according to claim 1, wherein said layer (CS) has a thickness chosen in the interval of the values that correspond to the first maximum of reflectivity on a graph representing the reflectivity of the structure of the analysis according to the thickness of said layer (CS), for the different wavelengths of the radiation used for excitation and detection during the analysis.

3. Use according to any of claims 1 or 2, wherein said layer (CS) has an atomic fraction (C]/([C+Si]) between 0 and 0.4.

4. Use as claimed in any preceding claim, wherein said layer (CS) is deposited on a substrate (S).

5. Use according to any of claims 1 to 3, wherein said layer (CS) is deposited on a metal layer (M).

6. Use according to claim 5, wherein said metal layer is continuous or discontinuous.

7. Use according to claim 5, wherein said metal layer is discontinuous and comprises aggregates having at least two submicronic dimensions.

8. Use according to any of claims 5 to 7, wherein said metal layer comprises a metal chosen from among copper, silver, gold, rhodium, lithium, sodium, potassium, rubidium, caesium, magnesium, calcium, strontium, barium, zinc, cadmium, aluminium, gallium, indium, lead or a mixture of at least two of these metals.

9. Use as claimed in any preceding claim, wherein said layer (CS) comprises on its surface a molecular layer (CM).

10. Use according to claim 9, wherein said molecular layer further comprises a means for fixing a ligand, an organic molecule, a biomolecule, a microorganism or a portion of a microorganism on its surface.

11. Use according to any of claims 1 to 9, wherein ligands, organic molecules, biomolecules, microorganisms or portions of microorganisms are present on the surface of said layer (CS).

12. Use as claimed in any preceding claim, wherein the surface plasmon resonance is local (RPSL).

13. Use as claimed in any preceding claim, wherein the analysis method is a method chosen from among a method for following up biochemical synthesis, a method for detecting an interaction between ligands, small organic molecules, biomolecules, a method for detecting an interaction between a biomolecule and a microorganism or a portion of a microorganism, a molecular screening method.

14. Use as claimed in any preceding claim, wherein said analysis method is an analysis method by fluorescence and by local or non-local surface plasmon resonance (SPR).

15. Use as claimed in any preceding claim, wherein said analysis method is carried out in a liquid medium.


### SEQUENCE LISTING

<110> ÉCOLE POLYTECHNIQUE
   CNRS
   UNIVERSITÉ LILLE 1
   Ozanam, François
   Touahir, Larbi
   Galopin, Elizabeth
   Boukherroub, Rabah
   Chazalviel, Jean-Noël
   Gouget-Laemmel, Anne Chantal
   Szunerits, sabine
<120> UTILISATION D'UNE COUCHE DE SILICIUM AMORPHE
<130> BIP133602PC00
<150> FR0902747
   <151> 2009-06-05
<160> 6
<170> PatentIn version 3.5
<210> 1
   <211> 25
   <212> DNA
   <213> Artificial
<220>
   <223> Sonde ON1
<400> 1
   aggcgtcgat tttaagatgg gcgtt 25
<210> 2
   <211> 50
   <212> DNA
   <213> Artificial
<220>
   <223> sonde ON2
<400> 2
   agcacaatga agatcaagat cattgctcct cctgagcgca agtactccgt 50
<210> 3
   <211> 50
   <212> DNA
   <213> Artificial
<220>
   <223> Oligonucléotide complémentaire de la sonde ON2
<400> 3
   acggagtact tgcgctcagg aggagcaatg atcttgatct tcattgtgct 50
<210> 4
   <211> 25
   <212> DNA
   <213> Artificial
<220>
   <223> Sonde ON4
<400> 4
   aggcgtcgat tttaagatgg gcgtt 25
<210> 5
   <211> 25
   <212> DNA
   <213> Artificial
<220>
   <223> sonde ON5
<400> 5
   aacgcccatc ttaaaatcga cgcct 25
<210> 6
   <211> 25
   <212> DNA
   <213> Artificial
<220>
   <223> Sonde ON6
<400> 6
   aggcgtcgat tttaagatgg gcgtt 25